# EUROPÄISCHE PATENTSCHRIFT

(11) **EP 3 966 015 B1**
(45) Veröffentlichungstag und Bekanntmachung des Hinweises auf die Patenterteilung: **23.08.2023**
(21) Anmeldenummer: 20719371.5
(22) Anmeldetag: 08.04.2020
(51) Int. Cl.: B29C 48/88, B29C 55/02

(54) **ANLAGE ZUR HERSTELLUNG EINES CASTFILMS UND FOLIENRECKANLAGE MIT EINER SOLCHEN ANLAGE**
SYSTEM FOR PRODUCING A CAST FILM, AND FILM STRETCHING INSTALLATION WITH SUCH A SYSTEM
INSTALLATION DE PRODUCTION D'UN FILM COULÉ ET INSTALLATION D'ÉTIRAGE DE FEUILLE COMPRENANT UNE TELLE INSTALLATION

(30) Priorität: 09.05.2019 DE 102019112077
(43) Veröffentlichungstag der Anmeldung: 16.03.2022
(73) Patentinhaber: Brückner Maschinenbau GmbH, 83313 Siegsdorf (DE)
(72) Erfinder: EDER, Christoph, 83059 Kolbermoor (DE); GÄRTZ, Andreas, 83355 Erlstätt (DE); KASPAR, Korbinian, 83395 Freilassing (DE); EDFELDER, Anton, 83246 Unterwössen (DE); WEBER, Ferdinand, 83119 Obing (DE)
(74) Vertreter: Flach Bauer & Partner Patentanwälte mbB
(86) Internationale Anmeldenummer: PCT/EP2020/060062
(87) Internationale Veröffentlichungsnummer: WO 2020/224908

(56) Entgegenhaltungen:
- WO-A2-2009/127197
- JP-A- S5 534 957

## Beschreibung

Die Erfindung betrifft eine Anlage zur Herstellung eines Castfilms und Folienreckanlage mit einer solchen Anlage.

Zur Herstellung von Folien werden die Ausgangsstoffe meistens einem Extruder zugeführt und in diesem durch Aufheizen verflüssigt. Diese Kunststoffschmelze wird dann durch ein Breitschlitzwerkzeug, welches auch als Breitschlitzdüse bezeichnet werden kann, hindurch gepresst. Diese Kunststoffschmelze wird anschließend auf eine gekühlte Walze (= Kühlwalze oder Chill-Roll) angelegt bzw. ausgegeben.

Im Anschluss daran wird die auf die Kühlwalze ausgegebene Kunststoffschmelze, die auch als Castfilm bzw. Schmelzefilm bezeichnet werden kann, über weitere Walzen zusätzlichen Einrichtungen zugeführt, die den Castfilm in Längsrichtung und/oder in Querrichtung verstrecken (= Recken). Diese weiteren Walzen sind unterschiedlich weit vom Boden beabstandet, so dass der Castfilm einen mäanderförmigen Verlauf aufweist. Diese weiteren Walzen können auch unterschiedliche Drehgeschwindigkeiten haben und/oder unterschiedlich temperiert sein.

Damit die Kunststoffschmelze besonders gut an der Kühlwalze anliegt wird ein elektrostatisches Anlegesystem verwendet. Entsprechende Elektroden werden beabstandet zur Kühlwalze geführt und mit einer Spannung von mehreren tausend Volt beaufschlagt. Durch die angelegte elektrische Spannung werden die Dipole innerhalb der Kunststoffschmelze ausgerichtet. Die Kühlwalze ist dabei entsprechend elektrisch geerdet, so dass die Kunststoffschmelze an die Kühlwalze angedrückt wird. Um einen elektrischen Überschlag von der Elektrodenanordnung zur geerdeten Kühlwalze zu verhindern, wird ein Isolator in dem Bereich angebracht, der nicht von der Kunststoffschmelze bedeckt ist. Dieser Isolator muss allerdings regelmäßig nachgeführt werden. Die Kunststoffschmelze selbst wirkt dagegen als Isolator, also als Dielektrikum zwischen der Elektrodenanordnung und der geerdeten Kühlwalze. Im Betrieb selbst kann sich die Breite über die sich die Kunststoffschmelze auf der Kühlwalze (entlang der Längsrichtung der Kühlwalze) erstreckt ändern. Eine solche Änderung entsteht bereits beim Abziehen der Kunststoffschmelze aus der Breitschlitzdüse. Die Kunststoffschmelze hat eine geringere Breite als die Breitschlitzdüse. Diese Differenz in der Breite wird auch als Einsprung (die Kunststoffschmelze zieht sich nach dem Austritt aus der Breitschlitzdüse geringfügig zusammen) bezeichnet.

Eine solche Anpassung, die sowohl im Betrieb als auch beim erneuten Anfahren der Anlage durchgeführt werden muss, wird häufig vergessen. Dadurch können dann die oben beschriebenen elektrischen Überschläge von der Elektrode hin zur Kühlwalze entstehen. Diese Überschläge beschädigen einerseits die Oberfläche der Kühlwalze und sorgen andererseits für eine reduzierte Lebensdauer der Hochspannungserzeugungseinrichtung.

Eine solche manuelle Nachjustierung ist dabei aufwendig und störanfällig. Gerade bei einer Erhöhung der Anlagengeschwindigkeit vergrößert sich der Einsprung und es muss sehr schnell eine Nachjustierung erfolgen.

Aus der WO 2009/127197 A2 ist eine Pinning-Elektrodenanordnung bekannt. Nach dem Austritt der Kunststoffschmelze auf die Gießwalze wird versucht die Kunststoffschmelze an der Gießwalze möglichst gut anzudrücken. Dies gelingt umso besser je höher die elektrische Ladungsbelegung an der Folienoberfläche ist. Dabei sollen auch die Randbereiche der Kunststoffschmelze auf der Gießwalze angedrückt werden. Hierzu schlägt die WO 2009/127197 A2 in sämtlichen Ausführungsbeispielen den Einsatz von Bürsten vor, deren Borsten aus dünnen Metalldrähten oder Kohlenstoff-Filamenten bestehen und elektrisch leitfähig sind. Diese Borsten sind dabei in Richtung der Kunststoffschmelze gerichtet. Um diese Borsten von Verunreinigungen zu befreien sind entsprechende Luftkanäle in der Elektrodenanordnung vorgesehen, in die Druckluft eingeblasen wird, die über den Borsten austritt. Der Einsatz dieser Bürsten ist in der WO 2009/127197 A2 zwingend vorgesehen. Diese Bürsten sollen schwenkbar angeordnet und parallel zur Längsachse der Gießwalze verfahrbar sein. Durch die Verfahrbarkeit der Bürsten soll sichergestellt werden, dass sich die Bürsten immer oberhalb der Kunststoffschmelze befinden und es zu keinen Spannungsüberschlägen hin zur Gießwalze kommt. Der Einsatz einer Isolatoranordnung zwischen der Bürste und der Kunststoffschmelze wird in der WO 2009/127197 A2 zwar in einem Ausführungsbeispiel erwähnt, erweist sich in der Praxis allerdings als sehr nachteilig, weil dadurch die Borsten umgebogen werden und abbrechen können. Die abgebrochenen Borsten fallen häufig auf die Kunststoffschmelze und verunreinigen diese. Die WO 2009/127197 A2 schlägt daher das Verdrehen der Bürste um eine Drehachse vor. Der in der WO 2009/127197 A2 beschriebene Aufbau bringt daher gleich eine ganze Reihe von Nachteilen mit sich.

In der DE 23 24 345 C2 wird erläutert, dass sich der Einsprung im Verhältnis zur Kühlwalzenumdrehungsgeschwindigkeit und somit zur Lineargeschwindigkeit des Castfilms ändert. Ein Potentiometer, welches mit einem Antrieb der Kühlwalze gekoppelt ist, erzeugt dabei eine entsprechende Bezugsspannung, die zur Umdrehungsgeschwindigkeit korrespondiert. Ein weiteres Potentiometer befindet sich am Antrieb einer Verstelleinheit für eine Isolatoranordnung. Sind beide Spannungen in etwa gleich, wird die Isolatoranordnung nicht weiter verfahren (z.B. zum Randbereich hin oder vom Randbereich weg). Ändert sich allerdings die Geschwindigkeit des Antriebs der Kühlwalze, so ändert sich auch die entsprechende Bezugsspannung des Potentiometers. Der Antrieb der Verstelleinheit bewegt nun die Isolatoranordnung in die entsprechende Richtung und zwar so lange, bis beide Spannungen wieder in etwa gleich groß sind.

Problematisch ist allerdings, dass der Einsprung der Kunststoffschmelze nicht nur proportional zur Lineargeschwindigkeit des Castfilms ist, sondern auch von vielen anderen Faktoren abhängt. So ist der Einsprung beispielsweise vom Extruderausstoß, der Foliendicke und dem eigentlichen Rohstoff abhängig. Insbesondere beeinflusst die Viskosität des extrudierten Rohstoffs maßgeblich den Einsprung der Folie.

Dadurch, dass diese beispielhaft genannten Faktoren allesamt einen Einfluss auf den Einsprung haben, kann bei einem Produktwechsel (d.h. es wird eine andere Folie produziert mit z.B. anderem Lagenaufbau, anderem Material, anderer Foliendicke usw.) nicht garantiert werden, dass der Einsprung weiterhin proportional zur Lineargeschwindigkeit des Castfilms ist. In diesem Fall können wiederum elektrische Überschläge und damit einhergehende Beschädigungen der Kühlwalze und der Hochspannungserzeugungseinrichtung auftreten.

Aus derselben Patentfamilie, der die DE 23 24 345 C2 angehört, ist außerdem die US 3 982 863 bekannt. Aus dieser Druckschrift ist noch der Einsatz von Sensoren gezeigt, die die Breite des Castfilms nach dem Ablösen von der Kühlwalze ermitteln. Entsprechend dieser Breite wird die Isolatoranordnung verfahren.

Nachteilig ist allerdings, dass das System eine gewisse Trägheit aufweist und auf eine Veränderung des Einsprungs nicht unmittelbar reagiert werden kann. Somit können wiederum elektrische Überschläge und damit Beschädigungen entstehen.

Zudem betrifft JP S 55 34 957 A eine Schnellkühlvorrichtung für polymerisierte Folie, die eine Lichtbogenentladung zwischen einer freiliegenden Elektrode und einer Gießtrommel durch Erfassen der Position einer Folienkante verhindert. Es ist daher die Aufgabe der hier vorliegenden Erfindung eine Anlage zur Herstellung eines Castfilms und eine entsprechende Folienreckanlage mit einer solchen Anlage zu schaffen, durch die es möglich ist, Veränderungen des Einsprungs derart zu erfassen, dass eine entsprechende Isolatoranordnung vor dem Entstehen eines elektrischen Überschlags verstellt werden kann und ein elektrischer Überschlag zuverlässig vermieden wird.

Die Aufgabe wird durch die erfindungsgemäße Anlage zur Herstellung eines Castfilms gemäß dem Anspruch 1 und durch die Folienreckanlage mit einer entsprechenden Anlage zur Herstellung des Castfilms gemäß dem Anspruch 14 gelöst. Die Ansprüche 2 bis 13 beschreiben vorteilhafte Weiterbildungen der erfindungsgemäßen Anlage zur Herstellung des Castfilms.

Die erfindungsgemäße Anlage zur Herstellung eines Castfilms für eine Folienreckanlage umfasst eine Breitschlitzdüse, eine Kühlwalze, mit einem zwischen zwei gegenüberliegenden Stirnseiten der Kühlwalze verlaufenden Kühlwalzenmantel, eine Elektrodenanordnung, eine Hochspannungserzeugungseinrichtung, eine Isolatoranordnung, eine Sensorvorrichtung und eine Steuereinrichtung. Die Breitschlitzdüse ist dazu ausgebildet eine Kunststoffschmelze auf einen Auftreffbereich der Oberfläche der rotierenden Kühlwalze (engl. Chill-Roll) auszugeben, wodurch ein Castfilm gebildet wird. An einem Abziehbereich der Kühlwalze, der in Rotationsrichtung der Kühlwalze versetzt zu dem Auftreffbereich angeordnet ist, ist der Castfilm von der Oberfläche der Kühlwalze abziehbar. Danach ist der Castfilm weiteren Stufen einer Folienreckanlage zuführbar. Zwischen dem Auftreffbereich und dem Abziehbereich der Kühlwalze ist die Elektrodenanordnung angeordnet. Diese verläuft beabstandet zur Oberfläche der Kühlwalze und vorzugsweise parallel zur Längsachse der Kühlwalze zumindest in einer Teillänge der Kühlwalze zwischen den beiden Stirnseiten der Kühlwalze. Die Hochspannungserzeugungseinrichtung ist dazu ausgebildet, eine Hochspannung zu erzeugen und an die Elektrodenanordnung anzulegen. Dabei kommen Gleichspannungen von 3.000 Volt bis 15.000 Volt bzw. auch von bis zu 30.000, 40.000 oder 50.000 Volt in Frage. Die Spannung kann je nach Material bzw. Umdrehungsgeschwindigkeit der Kühlwalze geändert werden. Der Auftreffbereich und der Abziehbereich sind vorzugsweise derart zueinander angeordnet, dass der Castfilm vorzugsweise über mehr als 30%, 40%, 50% oder mehr als 60% aber vorzugsweise über weniger als 80% der Umfangsfläche der Kühlwalze an dieser anliegt. Besonders bevorzugt liegt der Castfilm über einen Teilumfangsbereich der Kühlwalze mit einem Teilwinkel von mehr als 120°, 130°, 140°, 150°, 160°, 170°, 180°, 190°, 200°, 210°, 230° oder mehr als 240° aber vorzugsweise von weniger als 320°, 310°, 300°, 290° oder weniger als 280° an der Kühlwalze an.

Die Isolatoranordnung ist dabei zwischen der Elektrodenanordnung und dem Kühlwalzenmantel der Kühlwalze verschieblich angeordnet. Die Sensorvorrichtung ist dazu ausgebildet, fortlaufend den linken und den rechten Castfilmrand (bzw. die Breite des Castfilms) zu ermitteln. Die Steuereinrichtung ist zur Vermeidung von Spannungsüberschlägen zwischen der Elektrodenanordnung und der Kühlwalze dazu ausgebildet, anhand des ermittelnden linken Castfilmrandes und des ermittelnden rechten Castfilmrandes die Isolatoranordnung derart zu verfahren, dass sich die Isolatoranordnung zwischen der linken Stirnseite der Kühlwalze und dem linken Castfilmrand und zwischen der rechten Stirnseite der Kühlwalze und dem rechten Castfilmrand befindet. Dabei ist insbesondere der Bereich des Castfilms zwischen dem linken Castfilmrand und dem rechten Castfilmrand hin zur Elektrodenanordnung frei von der Isolatoranordnung. Dadurch kann das elektrische Feld fast oder auf die gesamte Breite des Castfilms einwirken. Der Sensorbereich der Sensorvorrichtung ist in Austragsrichtung des Castfilms zur Breitschlitzdüse nachlaufend und zur Elektrodenanordnung vorlaufend angeordnet. Dies bedeutet, dass der Sensorbereich bezogen auf die Bewegungsrichtung des Castfilms zwischen der Breitschlitzdüse und der Elektrodenanordnung angeordnet ist.

Es ist besonders vorteilhaft, dass eine Sensoreinrichtung dazu ausgebildet ist, den linken und den rechten Castfilmrand zu detektieren bzw. zu ermitteln und in Abhängigkeit dieses Detektionsergebnisses die Isolatoranordnung entsprechend verfährt, so dass sich die Isolatoranordnung immer zwischen der Elektrodenanordnung und dem Teil des Kühlwalzenmantels der Kühlwalze befindet, der nicht von dem Castfilm bedeckt ist. Dadurch, dass der Sensorbereich vor der Elektrodenanordnung angeordnet ist, werden Änderungen im Einsprung frühzeitig detektiert, so dass die Isolatoranordnung stets optimal nachgeführt wird und damit optimal positioniert ist und Spannungsüberschläge verhindert werden.

Die Isolatoranordnung umfasst ein linkes Isolatorelement und ein (vom linken Isolatorelement getrenntes) rechtes Isolatorelement. Das linke Isolatorelement ist von der linken Stirnseite der Kühlwalze in Richtung der Mitte der Kühlwalze und umgekehrt verfahrbar, wohingegen das rechte Isolatorelement von der rechten Stirnseite der Kühlwalze in Richtung der Mitte der Kühlwalze und umgekehrt verfahrbar ist. In einer bevorzugten Ausführungsform umfasst die Sensorvorrichtung eine optische Sensorvorrichtung. Die Sensorvorrichtung weist außerdem bevorzugt eine linke Sensoreinrichtung und eine rechte Sensoreinrichtung auf. Die linke Sensoreinrichtung ist dazu ausgebildet den linken Castfilmrand zu ermitteln bzw. zu erfassen und die rechte Sensoreinrichtung ist dazu ausgebildet den rechten Castfilmrand zu ermitteln bzw. zu erfassen.

In einer bevorzugten Weiterbildung umfassen sowohl die linke als auch die rechte Sensoreinrichtung jeweils einen ersten IR-Sensor und einen zweiten IR-Sensor. Die Sensorbereiche des ersten und zweiten IR-Sensors der linken Sensoreinrichtung sind in Längsrichtung der Kühlwalze versetzt zueinander angeordnet, wobei der Sensorbereich des zweiten IR-Sensors der linken Sensoreinrichtung näher an der linken Stirnseite der Kühlwalze angeordnet ist als der Sensorbereich des ersten IR-Sensors der linken Sensoreinrichtung. Der erste IR-Sensor der linken Sensoreinrichtung kann auch als innerer Sensor bezeichnet werden und der zweite IR-Sensor kann auch als äußerer IR-Sensor bezeichnet werden. Selbiges gilt auch für die Sensorbereiche des ersten und zweiten IR-Sensors der rechten Sensoreinrichtung.

Bevorzugt sind die Sensorbereiche des ersten IR-Sensors und des zweiten IR-Sensors der jeweiligen Sensoreinrichtung überlappungsfrei oder überwiegend überlappungsfrei (z.B. zu mehr als 70 %, 80 % oder zu mehr als 90 %) zueinander angeordnet. Weiter bevorzugt handelt es sich bei den Sensorbereichen des ersten und zweiten IR-Sensors um punktförmige Sensorbereiche. Es ist wünschenswert, dass die Aufspreizung des Sensorstrahls möglichst gering ist. Der Sensorstrahl der jeweiligen IR-Sensoren sollte möglichst derart auf die Oberfläche der Kühlwalze auftreffen, dass eine möglichst gute Reflektion zurück zu dem jeweiligen IR-Sensor möglich ist. Gute Werte haben sich insbesondere für Winkel von 85° bis 125°, insbesondere für 90° ergeben.

In einer weiter bevorzugten Ausführungsform wird die linke Sensoreinrichtung synchron mit dem linken Isolatorelement verfahren und die rechte Sensoreinrichtung synchron mit dem rechten Isolatorelement. Der Abstand zwischen dem ersten und dem zweiten IR-Sensor der jeweiligen Sensoreinrichtung ist im Betrieb vorzugsweise konstant.

In einer bevorzugten Ausführungsform ist die Steuereinrichtung dazu ausgebildet, die Messwerte des ersten und des zweiten IR-Sensors der linken Sensoreinrichtung und die Messwerte des ersten und zweiten IR-Sensors der rechten Sensoreinrichtung zu erfassen. Die Steuereinrichtung kann in Abhängigkeit dieser Messwerte das jeweilige linke bzw. rechte Isolatorelement in Richtung der Mitte der Kühlwalze oder weg von der Mitte der Kühlwalze verfahren bzw. in seiner Position unverändert zu belassen. Das linke Isolatorelement und das rechte Isolatorelement wird dabei von je einer Motoreneinheit verfahren, die wiederum durch die Steuereinrichtung ansteuerbar ist. Die Steuereinrichtung ist dabei, insbesondere in einem Betriebszustand (die Anlage erzeugt einen Castfilm), dazu ausgebildet, das linke Isolatorelement in Richtung der Mitte der Kühlwalze zu verfahren, wenn die Messwerte des ersten und zweiten IR-Sensors der linken Sensoreinrichtung unterhalb eines ersten Temperaturschwellwerts liegen. Der erste Temperaturschwellwert wird bevorzugt derart festgelegt, dass dieser (geringfügig) über der Temperatur der Kühlwalze aber unter der Temperatur des Castfilms liegt. In diesem Fall detektieren beide IR-Sensoren der linken Sensoreinrichtung die Temperatur der Kühlwalze und die Steuereinrichtung verfährt das Isolatorelement weiter in Richtung der Mitte der Kühlwalze. Die IR-Sensoren bewegen sich dabei synchron zum Isolatorelement und detektieren unterschiedliche Bereiche auf der Kühlwalze zu denen auch der Castfilm zählt. Selbiges gilt hier auch für das rechte Isolatorelement, welches ebenfalls in Richtung der Mitte der Kühlwalze verfahren wird, wenn die Messwerte des ersten und des zweiten IR-Sensor der rechten Sensoreinrichtung unterhalb des ersten Temperaturwerts liegen.

Umgekehrt gilt, dass das linke Isolatorelement in Richtung der linken Stirnseite der Kühlwalze verfahren wird, wenn die Messwerte des ersten und zweiten IR-Sensors der linken Sensoreinrichtung oberhalb eines zweiten Temperaturschwellwerts liegen. Dieser zweite Temperaturschwellwert liegt (knapp) unterhalb der Temperatur des Castfilms den dieser im Normalbereich, also außerhalb des Randbereichs aufweist. In diesem Fall weiß die Steuereinrichtung, dass das linke Isolatorelement zu weit über den Castfilm übersteht und verfährt dieses weiter in Richtung der linken Stirnseite der Kühlwalze, so dass das elektrische Feld auch am äußeren linken Bereich des Castfilms, also am linken Randbereich des Castfilms einwirkt und dort die Dipole entsprechend ausrichten kann. Selbiges gilt auch für das rechte Isolatorelement, welches wiederum in Richtung der rechten Stirnseite der Kühlwalze verfahren wird, wenn die Messwerte des ersten und zweiten IR-Sensors der rechten Sensoreinrichtung oberhalb des zweiten Temperaturschwellwerts liegen.

Ergänzend oder alternativ ist die Steuereinrichtung dazu ausgebildet, das linke Isolatorelement in seiner Position zu belassen, wenn ein Messwert des ersten IR-Sensors der linken Sensoreinrichtung von einem Messwert des zweiten IR-Sensors der linken Sensoreinrichtung um einen vorbestimmten Grenzwert abweicht. Einer dieser Sensoren detektiert beispielsweise den Normalbereich des Castfilms und ein anderer Sensor den Randbereich (dieser ist wärmer als der Normalbereich) bzw. die Kühlwalze (diese ist kälter als der Normalbereich). Derartige abweichende Messergebnisse werden dann von der Steuereinrichtung dahingehend interpretiert, dass das linke Isolatorelement seine optimale Position erreicht hat. Selbiges gilt auch für das rechte Isolatorelement. Dieses behält seine Position ebenfalls bei, wenn ein Messwert des ersten IR-Sensors der rechten Sensoreinrichtung von einem Messwert des zweiten IR-Sensors der rechten Sensoreinrichtung um mehr als einen vorbestimmten Grenzwert abweicht.

In einem weiteren erfindungsgemäßen Ausführungsbeispiel der Anlage umfasst die Sensoreinrichtung eine Kamera, die derart angeordnet und ausgebildet ist, dass sie auf einen Bereich der Kühlwalze gerichtet ist, der zwischen dem Auftreffbereich der Kunststoffschmelze und der Elektrodenanordnung liegt und die gesamte Breite des Castfilms aufnimmt. Die Steuereinrichtung ist dazu ausgebildet, anhand dieser Aufnahmen fortlaufend den linken und den rechten Castfilmrand zu ermitteln und in Abhängigkeit der Breite des Castfilms das linke und das rechte Isolatorelement entsprechend zu verfahren (z.B. weiter in Richtung der Mitte der Kühlwalze oder weiter in Richtung der linken bzw. rechten Stirnseite der Kühlwalze). Es wäre auch möglich, dass die Kamera auf einen Bereich zwischen der Breitschlitzdüse und dem Auftreffbereich der Kunststoffschmelze auf der Kühlwalze gerichtet ist. In diesem Fall würde die Kamera mit einer Durchlichtmessung arbeiten und die Breite des Castfilms im Fall aufnehmen. Es kann hier noch eine Lichtquelle eingesetzt werden, um den Kontrast zu erhöhen. Der Castfilm würde dann zwischen der Kamera und der Lichtquelle verlaufen. Die Steuereinrichtung wäre wiederum dazu ausgebildet, anhand dieser Aufnahmen fortlaufend den linken und den rechten Castfilmrand zu ermitteln und das linke bzw. das rechte Isolatorelement entsprechend zu verfahren.

In einem weiteren bevorzugten Ausführungsbeispiel handelt es sich bei der Kamera um eine Kamera, die im sichtbaren Licht arbeitet bzw. um eine Kamera, die im Infrarotbereich arbeitet. Es kann sich ebenfalls um eine Zeilenkamera handeln, die zwar die gesamte Breite des Castfilms aufnimmt, allerdings nur eine bestimmte Anzahl von Informationen bezüglich der Höhe des Castfilms (senkrecht zur Breite) liefert oder eben um eine Flächenkamera. Die Kamera ist bevorzugt stationär angeordnet. Sie könnte allerdings auch mitlaufend, also insbesondere synchron zur Bewegung des linken bzw. rechten Isolatorelements angeordnet sein.

In einem weiteren Ausführungsbeispiel der erfindungsgemäßen Anlage umfasst die Sensorvorrichtung einen linken Laserscanner und einen rechten Laserscanner. Der linke Laserscanner ist im Bereich des linken Castfilmrandes angeordnet und dazu ausgebildet, den Abstand zum Castfilm bzw. eine Dicke des Castfilms zu messen, wobei die Steuereinrichtung dazu ausgebildet ist, anhand dieses Messergebnisses fortlaufend den linken Castfilmrand zu ermitteln. Selbiges gilt auch für den rechten Laserscanner bezüglich des rechten Castfilmrandes. In diesem Fall ist es ausreichend, wenn der linke Laserscanner und der rechte Laserscanner stationär angeordnet sind.

In einem weiteren erfindungsgemäßen Ausführungsbeispiel der Anlage umfasst die Sensorvorrichtung einen linken Laser-Entfernungsmesser und einen rechten Laser-Entfernungsmesser. Der linke Laser-Entfernungsmesser ist beabstandet von der Kühlwalze angeordnet und derart ausgerichtet, dass ein Laserstrahl parallel zur Oberfläche der Kühlwalze verläuft und auf den linken Randbereich des Castfilms trifft, wobei der linke Laser-Entfernungsmesser dazu ausgebildet ist, eine Entfernung zum linken Randbereich des Castfilms zu messen und wobei die Steuereinrichtung dazu ausgebildet ist anhand dieses Messergebnisses fortlaufend den linken Castfilmrand zu ermitteln. Je nach gemessener Entfernung wird das linke Isolatorelement weiter in Richtung der Stirnseite der Kühlwalze oder weiter in Richtung der Mitte der Kühlwalze verfahren. Selbiges gilt auch für den rechten Laser-Entfernungsmesser bezüglich des rechten Castfilmrandes.

In einer bevorzugten Ausführungsform umfasst die Sensoreinrichtung ein Schutzglas bzw. eine Vorsatzlinse, die vor der Sensoroberfläche angeordnet ist und die Sensoroberfläche vor Verschmutzung schützt. Dies gilt insbesondere in Hinblick darauf, dass Oligomere aus dem extrudierten Castfilm ausdampfen können. Diese Schutzgläser bzw. Vorsatzlinsen sind insbesondere auf die Sensoroberfläche aufschraubar und können einfach ausgetauscht werden. Diese verhindern auch eine Vernebelung der Sensoroberfläche und somit einen Sensorausfall bzw. Fehlauslösungen.

Weiterhin umfasst die Sensoreinrichtung bevorzugt noch ein Gehäuse, in welchem die Sensortechnik eingebracht bzw. integriert ist. Das Gehäuse ist dabei durch eine Kühleinrichtung kühlbar, wodurch die Sensorvorrichtung besonders nahe an die Kühlwalze angeordnet werden kann.

Die erfindungsgemäße Folienreckanlage umfasst eine entsprechende Anlage zur Herstellung eines Castfilms.

Verschiedene Ausführungsbeispiele der Erfindung werden nachfolgend unter Bezugnahme auf die Zeichnungen beispielhaft beschrieben. Gleiche Gegenstände weisen dieselben Bezugszeichen auf. Die entsprechenden Figuren der Zeichnungen zeigen im Einzelnen:
Figur 1: eine Übersicht einer Folienreckanlage, die die erfindungsgemäße Anlage zur Herstellung eines Castfilms umfasst;
Figur 2: einen Teil der erfindungsgemäßen Anlage zur Herstellung eines Castfilms;
Figuren 3A, 3B, 3C:
   Untersuchungsergebnisse, die die Beschaffenheit eines Castfilmrandes näher beschreiben;

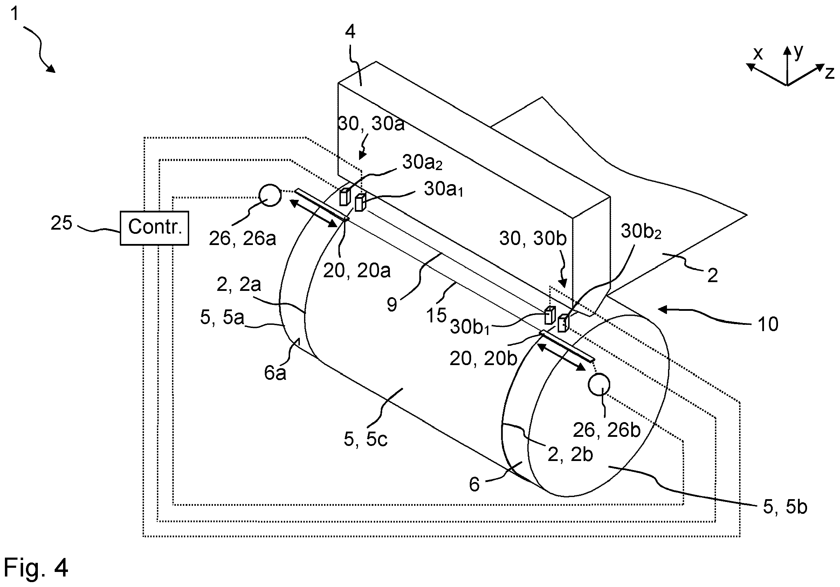

Figur 4: die erfindungsgemäße Anlage zur Herstellung eines Castfilms mit einer Sensorvorrichtung eines ersten Typs;
Figuren 5A, 5B, 5C, 5D:
   verschiedene Ausführungsbeispiele der Sensorvorrichtung aus Figur 4 in Form zweier versetzt zueinander angeordneten IR-Sensoren;
Figuren 6A, 6B, 6C:
   verschiedene weitere Ausführungsbeispiele der Sensorvorrichtung in Form eines Laserscanners;

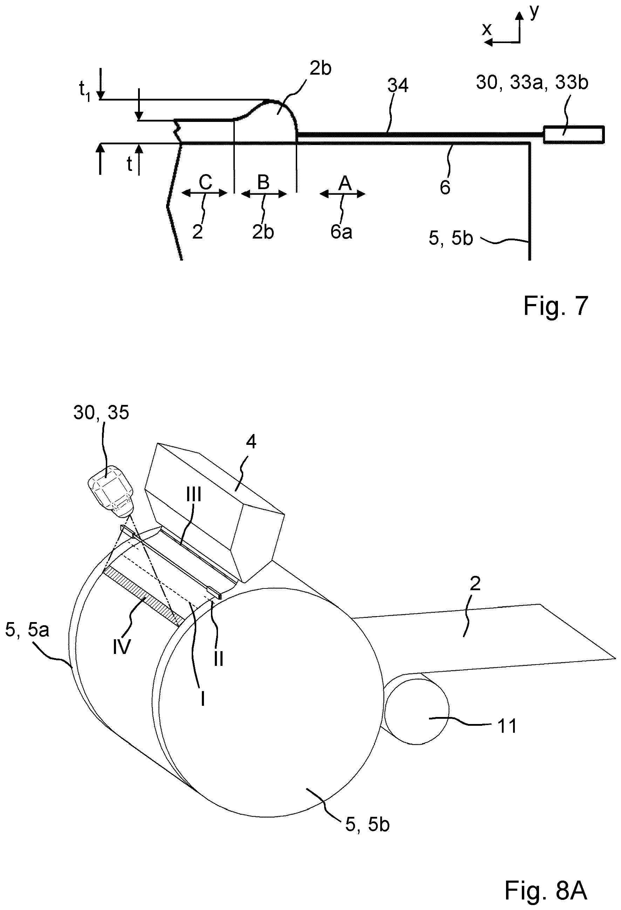

Figur 7: ein weiteres Ausführungsbeispiel der Sensorvorrichtung in Form eines Laser-Entfernungsmessers;
Figuren 8A, 8B:
   verschiedene Ausführungsbeispiele der Sensorvorrichtung in Form von Kameras; und

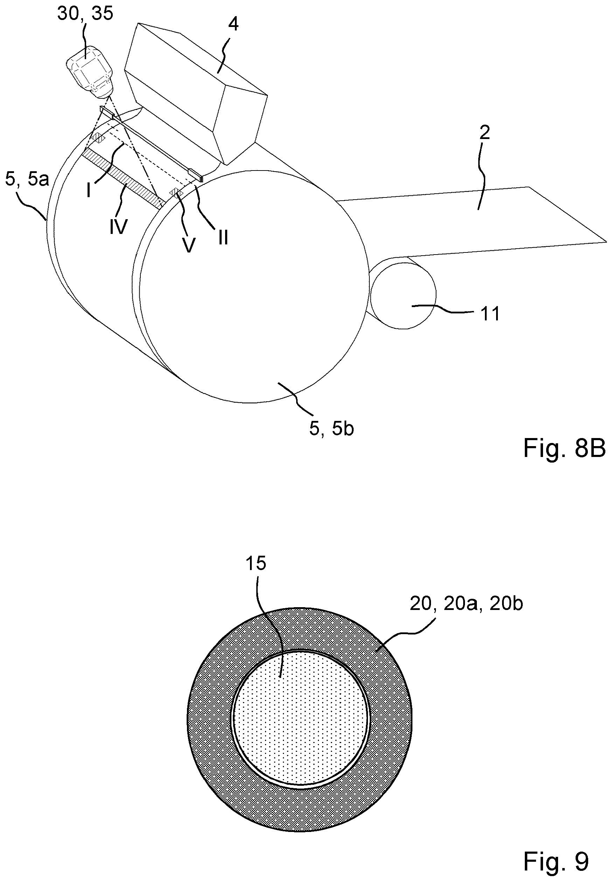

Figur 9: einen Querschnitt durch ein rohrförmiges Isolatorelement mit eingesetzter Elektrodenanordnung.

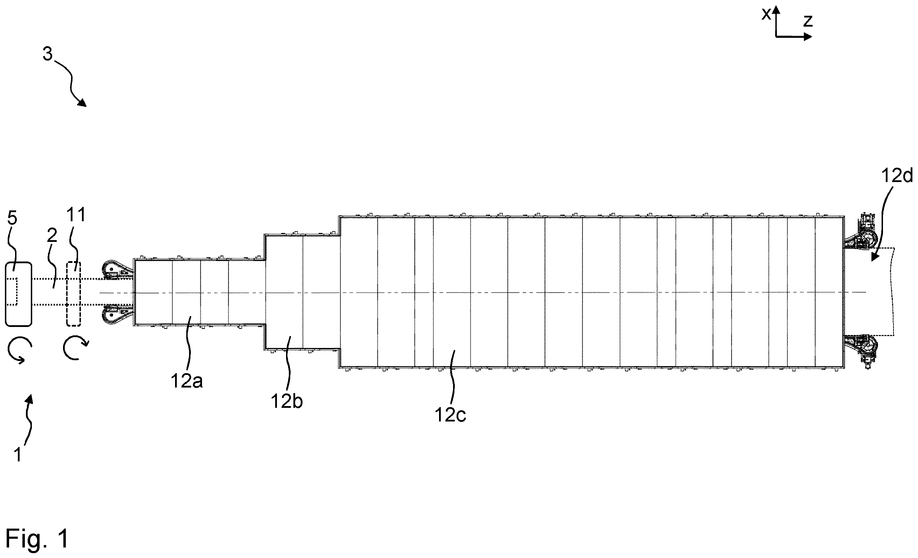

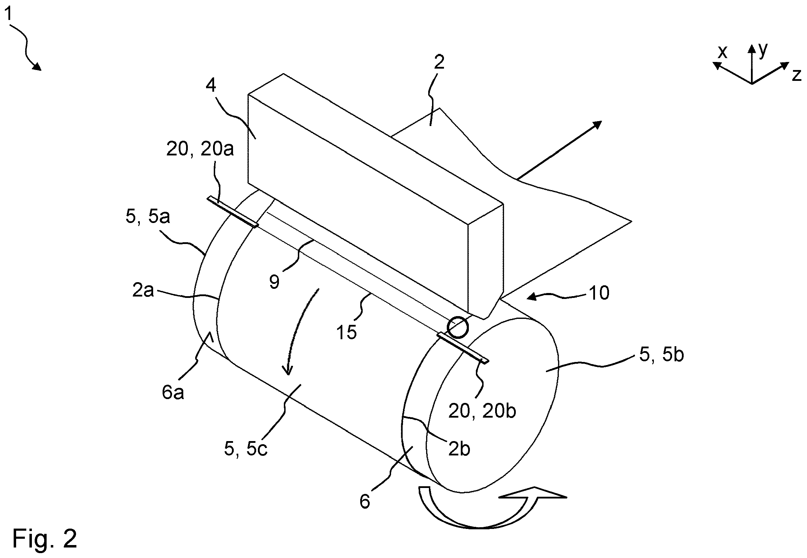

Figur 1 zeigt eine herkömmliche Anlage 1 zur Herstellung eines Castfilms 2, die Bestandteil einer Folienreckanlage 3 ist. In dem Ausführungsbeispiel aus Figur 1 handelt es sich bei der Folienreckanlage 3 um eine Simultanreckanlage. Die Erfindung ist allerdings auch auf andere Typen von Reckanlagen anwendbar wie z.B. auf sequentielle Reckanlagen. Die erfindungsgemäße Anlage 1 zur Herstellung des Castfilms 2 ist am Anfang der Folienreckanlage 3 angeordnet und umfasst eine Breitschlitzdüse 4 (s. Figur 2) und eine Kühlwalze 5. Die Kühlwalze 5 umfasst zwei gegenüberliegende Stirnseiten 5a, 5b, zwischen denen der Kühlwalzenmantel 6 verläuft.

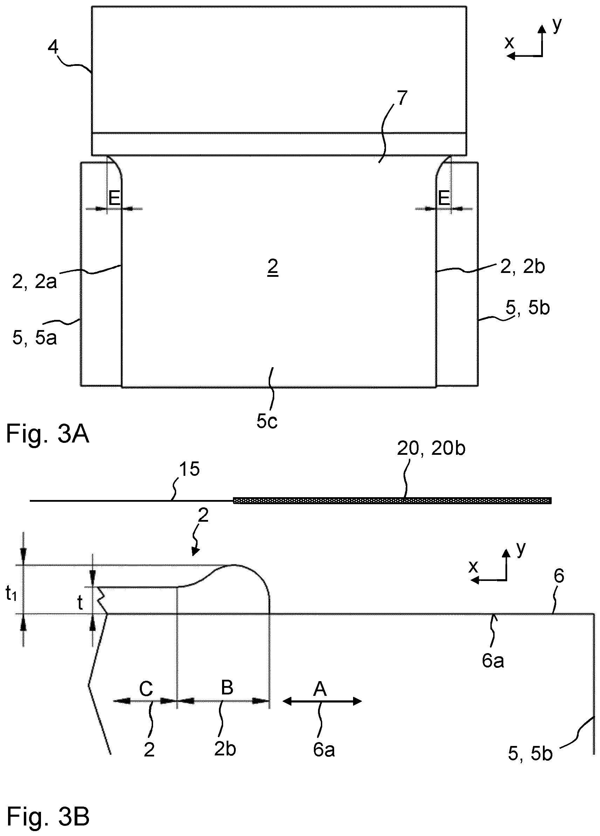

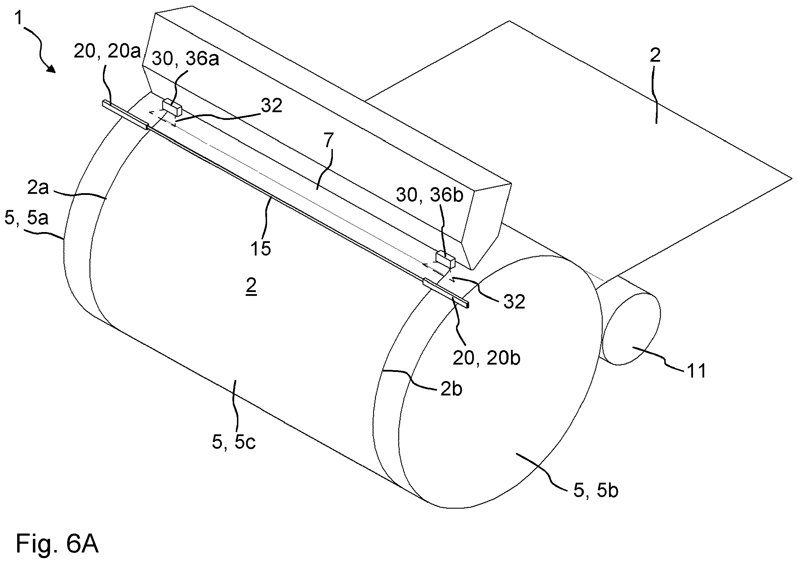

Die Breitschlitzdüse 4 ist dazu ausgebildet, eine Kunststoffschmelze 7 (s. Figuren 3A und 6A) auf einem Auftreffbereich 9 einer Oberfläche 6a der rotierenden Kühlwalze 5 auszugeben, wodurch der Castfilm 2 gebildet wird.

An einem Abziehbereich 10 der Kühlwalze 5, der in Rotationsrichtung der Kühlwalze 5 versetzt zu dem Auftreffbereich 9 angeordnet ist, ist der Castfilm 2 von der Oberfläche 6a der Kühlwalze 5 abziehbar und weiteren Einheiten der Folienreckanlage 3 mittelbar oder unmittelbar zuführbar.

In dem Beispiel aus Figur 1 gibt es noch zumindest eine weitere Walze 11, die nach der Kühlwalze 4 angeordnet ist. Es können noch zusätzliche Walzen vorgesehen sein, die unterschiedlich weit von dem Boden beabstandet sind, so dass der Castfilm 2 einen mäanderförmigen Verlauf aufweist.

Der Castfilm 2 wird im Anschluss daran einer Vorheizzone 12a der Folienreckanlage 3 zugeführt. In dieser Vorheizzone wird der Castfilm 2 auf eine bestimmte Temperatur erwärmt. Im Anschluss daran gibt es eine Reckzone 12b, in welcher der Castfilm 2 quer und/oder längs zur Bewegungsrichtung gestreckt, also gereckt wird. Im Anschluss daran gibt es noch mehrere Nachbehandlungszonen 12c, um den Castfilm 2 entsprechend zu temperieren. Diese Zonen werden auch als Annealing-Zonen bzw. Relax-Zonen bezeichnet. An einem Ende 12d wird der Castfilm 2 ausgegeben und entsprechend aufgerollt.

In Figur 2 ist ein Teil der erfindungsgemäßen Anlage 1 zur Herstellung des Castfilms 2 gezeigt. Zu erkennen ist, dass über eine Breitschlitzdüse 4 die Kunststoffschmelze 7 auf einen Auftreffbereich 9 der Oberfläche 6a der Kühlwalze 5 ausgegeben wird. Die Kühlwalze 5 dreht sich in diesem Ausführungsbeispiel entgegen des Uhrzeigersinns.

Damit der Castfilm 2 optimal an der Kühlwalze 5 anliegt und nicht von dieser absteht, werden die Dipole in dem Castfilm 2 durch ein elektrisches Feld entsprechend ausgerichtet. Hierzu ist eine Elektrodenanordnung 15 vorgesehen, die in diesem Fall als Draht bzw. Stab ausgebildet ist und zwischen dem Auftreffbereich 9 und dem Abziehbereich 10 der Kühlwalze 5 angeordnet ist. Die Elektrodenanordnung 15 verläuft beabstandet zur Oberfläche 6a der Kühlwalze 5 und erstreckt sich zumindest über eine Teillänge der Kühlwalze 5 zwischen den beiden Stirnseiten 5a, 5b. Die Elektrodenanordnung 15 könnte sich auch über die gesamte Länge der Kühlwalze 5 erstrecken.

Zwischen der Elektrodenanordnung 15, die aus einem Draht bzw. einem Stab gebildet ist und dem Castfilm 2 ist keine Bürste angeordnet, die insbesondere aus einem elektrisch leitfähigen Material besteht oder ein solches umfasst. Mit anderen Worten ist der Abstandsraum zwischen dem Castfilm 2 und dem Draht bzw. dem Stab frei von einer solchen Bürste, wobei der Draht bzw. der Stab den Castfilm 2 über seine gesamte Breite hin überdeckt.

Die Elektrodenanordnung 15 ist über den gesamten Bereich, in welchem sie den Castfilm 2 überdeckt, frei von einer Bürste mit elektrisch leitfähigen Borsten.

Bevorzugt werden die Dipole in dem Castfilm 2 daher einzig oder überwiegend (zu mehr als 80%) durch das elektrische Feld ausgerichtet, welches dem Draht bzw. dem Stab entspringt.

Eine nicht dargestellte Hochspannungserzeugungseinrichtung ist dazu ausgebildet, eine Hochspannung (Gleichspannung) zu erzeugen und an der Elektrodenanordnung 15 anzulegen. Die Höhe der Hochspannung ist abhängig von dem Material des Castfilms 2 und von dem Abstand der Elektrodenanordnung 15 zum Castfilm 2 und von der Geschwindigkeit mit welcher der Castfilm 2 bewegt wird. Die Spannung kann grundsätzlich in einem Bereich von wenigen kV bis hin zu 30 kV, 40 kV, 50 kV, 60 kV liegen. Die Hochspannung kann beispielsweise größer sein als 3 kV, 5 kV, 7 kV, 10 kV, 15 kV, 20 kV, 25 kV und vorzugsweise kleiner als 50 kV, 40 kV, 30 kV, 20 kV, 15 kV.

Die Dicke der Kunststoffschmelze 7, die die Breitschlitzdüse 4 verlässt, kann im Dickenbereich von 5 µm bis 5000 µm liegen.

Je nach Material der Kunststoffschmelze 7 bzw. der Geschwindigkeit, mit welcher die Kunststoffschmelze 7 ausgegeben wird, hat der eingangs erwähnte Einsprung E ein unterschiedliches Maß (s. Figur 3A). Der Einsprung E gibt dabei an, wie weit sich die Kunststoffschmelze 7 zusammenzieht. Insbesondere ist der Einsprung E die Differenz aus der Breite der Breitschlitzdüse 4 und der Breite des Castfilms 2 auf der Oberfläche 6a der Kühlwalze 5 geteilt durch zwei.

Dieser Einsprung E ist nicht nur abhängig von der Anlagengeschwindigkeit, sondern auch abhängig von anderen Parametern (Material des Castfilms 2, Temperatur usw.). Diese Parameter können sich im Produktionsprozess ändern.

Die Kunststoffschmelze 7 und damit der Castfilm 2 bestehen aus einem nicht elektrisch leitfähigen Material (Dielektrikum), so dass es zu keinem Spannungsüberschlag zwischen der Elektrodenanordnung 15 und dem Bereich der Kühlwalze 5 kommt, der vom Castfilms 2 bedeckt ist. Einen solchen Spannungsüberschlag kann es lediglich am Übergang des linken Castfilmrandes 2a bzw. des rechten Castfilmrandes 2b hin zur Kühlwalze 5 geben.

Um einen solchen Überschlag zu vermeiden, umfasst die erfindungsgemäße Anlage 1 eine Isolatoranordnung 20, die zwischen der Elektrodenanordnung 15 und dem Kühlwalzenmantel 6 der Kühlwalze 5 angeordnet ist. Diese Isolatoranordnung 20 ist dabei verschiebbar angeordnet. Sie kann einerseits weiter in Richtung der Mitte 5c des Kühlwalzenmantels 6 der Kühlwalze 5 verfahren werden und andererseits weiter in Richtung der jeweiligen Stirnseite 5a, 5b der Kühlwalze 5.

In Figur 2 ist dargestellt, dass die Isolatoranordnung 20 ein linkes Isolatorelement 20a und ein rechtes Isolatorelement 20b umfasst. Das linke Isolatorelement 20a ist von der linken Stirnseite 5a der Kühlwalze 5 in Richtung der Mitte 5c der Kühlwalze 5 und umgekehrt verfahrbar. Auch das rechte Isolatorelement 20b ist von der rechten Stirnseite 5b der Kühlwalze 5 in Richtung der Mitte 5c der Kühlwalze 5 und umgekehrt verfahrbar.

Das linke und das rechte Isolatorelement 20a, 20b sind unabhängig voneinander verfahrbar. Das linke Isolatorelement 20a ist in dem dargestellten Teil einer Anlage zur Herstellung eines Castfilms plattenförmig und zwischen der Elektrodenanordnung 15 und der Kühlwalze 5 angeordnet. Erfindungsgemäß ist es rohrförmig, wobei die Elektrodenanordnung 15 in diesem Fall die Form eines Bandes, eines Drahtes oder eines Stabes aufweist und durch das rohrförmige linke Isolatorelement 20a hindurchgeführt ist. Selbiges gilt ebenso für das rechte Isolatorelement 20b . Das linke Isolatorelement 20a kann auch einen anderen Aufbau haben als das rechte Isolatorelement 20b.

Ein solcher Aufbau, in welchem das Isolatorelement 20a, 20b als Hohlprofil oder als Rohr ausgebildet ist, ist in Figur 9 dargestellt. Das hohle Isolatorelement 20a, 20b ist dabei von der Elektrodenanordnung 15 durchsetzt. Das Isolatorelement 20a, 20b kann über die Elektrodenanordnung 15 geschoben werden. Die Elektrodenanordnung 15 liegt in diesem Fall nicht zwingend im Zentrum an, sondern kann aufgrund einer möglichen flexiblen Ausgestaltung unterschiedlich weit von der Innenwandung des rohrförmigen Isolatorelements 20a, 20b beabstandet sein. Ein Durchmesser der Elektrodenanordnung 15 ist kleiner als ein Innendurchmesser des Isolatorelements 20a, 20b, sodass bevorzugt noch ein Spalt bzw. Hohlraum zwischen einem Teilumfangsbereich der Elektrodenanordnung 15 und dem Isolatorelement 20a, 20b besteht. Dadurch kann das Isolatorelement 20a, 20b leichter verschoben werden. Das hohle bzw. rohrförmige Isolatorelement 20a, 20b kann beliebige Querschnitte (z.B. eckig, oval, usw.) aufweisen. In den Ausführungsbeispielen ist es rund. Dies muss aber nicht zwingend der Fall sein.

Das Isolatorelement 20a, 20b kann auch teleskopartig ausgebildet sein.

Vorzugsweise umfasst das Isolatorelement 20a, 20b lediglich an seinen beiden Stirnseiten Öffnungen, aus denen die als Draht bzw. Stab ausgebildete Elektrodenanordnung 15 austritt. Das Isolatorelement 20a, 20b ist insbesondere frei von einem unter Druck stehenden Gas, welches beispielsweise zur Kühlung und/oder Reinigung der Elektrodenanordnung 15 verwendet wird. Der Luftdruck innerhalb des vorzugsweise rohrförmigen Isolatorelements 20a, 20b entspricht vorzugsweise dem Luftdruck außerhalb des rohrförmigen Isolatorelements 20a, 20b.

Die Elektrodenanordnung 15 ist vorzugsweise einteilig aufgebaut. Insbesondere ist der Teil der Elektrodenanordnung 15, welcher sich oberhalb des Castfilm 2 bzw. oberhalb der Kühlwalze 5 erstreckt, einteilig aufgebaut. Dies wäre z.B. bei Einsatzes eines Drahtes bzw. Stabs für die Elektrodenanordnung 15 der Fall.

Ein Abstand der Elektrodenanordnung 15 zur Kühlwalze 5 ist vorzugsweise über die gesamte Länge der Elektrodenanordnung 15 bzw. der Kühlwalze 5 in etwa konstant. Bevorzugt ist allerdings der Abstand der Elektrodenanordnung 15 zur Kühlwalze 5 über den Teilbereich der Elektrodenanordnung 15 in etwa konstant, in welchem der Castfilm 2 unterhalb der Elektrodenanordnung 15 angeordnet ist. Der Wortlaut "in etwa" ist vorzugsweise derart zu verstehen, dass Abweichungen um weniger als 10mm, 8mm, 6mm, 4mm oder um weniger als 2mm darunterfallen. Bei Einsatz von Bürsten wäre der Abstand nicht konstant, weil es immer Zwischenbereiche zwischen den Einzelnen Borsten der Bürste gibt.

Der Draht bzw. Stab der Elektrodenanordnung 15 ist vorzugsweise frei von einem Hohlraum. Insbesondere ist kein Hohlraum innerhalb des Drahts oder Stabs vorhanden, der sich in Längsrichtung erstreckt (und den Draht oder Stab insbesondere über die überwiegende oder vollständige Länge durchsetzt). Der Draht bzw. Stab der Elektrodenanordnung 15 ist weiter vorzugsweise frei von einem Luftführung skanal.

Eine Querschnittsform eines Aufnahmekanals, der sich in Längsrichtung durch das als Hohlprofil bzw. als Rohr ausgebildete Isolatorelement 20a, 20b erstreckt, entspricht einer Querschnittsform der Elektrodenanordnung 15 oder ist einer Querschnittsform der Elektrodenanordnung 15 angenähert. Vorzugsweise ist die Querschnittsform des Aufnahmekanals des Isolatorelements 20a, 20b kreisförmig.

In Figur 4 ist weiterhin eine Steuereinrichtung 25 dargestellt. Die Steuereinrichtung 25 ist dazu ausgebildet, eine Antriebseinrichtung 26 anzusteuern. Bei dieser Antriebseinrichtung 26 handelt es sich vorzugsweise um eine elektrische Antriebseinrichtung 26, bei deren Betätigung die Isolatoranordnung 20 näher in Richtung der Mitte 5c der Kühlwalze 5 verfahren wird oder näher in Richtung der jeweiligen Stirnseite 5a, 5b der Kühlwalze 5. Vorzugsweise umfasst die Antriebseinrichtung 26 einen linken Antriebsmotor 26a und einen rechten Antriebsmotor 26b. Der linke Antriebsmotor 26a steht mit dem linken Isolatorelement 20a derart in Wirkverbindung, dass bei Betätigung des linken Antriebsmotors 26a das linke Isolatorelement 20a entweder in Richtung der Mitte 5c der Kühlwalze 5 verschoben wird oder in Richtung der linken Stirnseite 5a der Kühlwalze 5. Der rechte Antriebsmotor 26b steht dagegen mit dem rechten Isolatorelement 20b derart in Wirkverbindung, dass bei Betätigung des rechten Antriebsmotors 26b das rechte Isolatorelement 20b entweder in Richtung der Mitte 5c der Kühlwalze 5 verfahren wird oder in Richtung der rechten Stirnseite 5b der Kühlwalze 5.

Steuerverbindungen zwischen der Steuereinrichtung 25 und der Antriebseinrichtung 26, die den linken Antriebsmotor 26a und den rechten Antriebsmotor 26b umfasst, sind gepunktet dargestellt.

Im Hinblick auf Figur 3B ist ein Querschnitt durch den Castfilm 2 und die Kühlwalze 5 dargestellt.

Der Castfilm 2 umfasst einen Normalbereich C, in dem die Dicke in etwa konstant ist. Zum linken und rechten Castfilmrand 2a, 2b hin nimmt die Dicke zu. Dieser linke und rechte Castfilmrand 2a, 2b wird auch als Randbereich B bezeichnet. An diesen Randbereich B des linken und rechten Castfilmrandes 2a, 2b schließt sich die Oberfläche 6a der Kühlwalze 5 an. Dieser wird auch als Kühlwalzenbereich A bezeichnet. Der Randbereich B des linken und rechten Castfilmrandes 2a, 2b ist nicht nur dicker als der Normalbereich C des Castfilms 2, sondern weist aufgrund der höheren Dicke auch eine höhere Temperatur auf.

In Figur 3B sind außerdem noch die Elektrodenanordnung 15 und die Isolatoranordnung 20 dargestellt. Bei der Isolatoranordnung 20 ist das linke bzw. rechte Isolatorelement 20a, 20b dargestellt. Dieses endet in diesem Ausführungsbeispiel in etwa über dem Randbereich B des linken bzw. rechten Castfilmrandes 2a, 2b. Es könnte sich allerdings auch geringfügig (weniger als 10 cm, 8 cm, 6 cm, 4 cm, 2 cm oder weniger als 1 cm) in den Normalbereich C des Castfilms 2 hinein erstrecken. Es könnte auch um weniger als 4 cm, 3 cm, 2 cm, 1 cm oder weniger als 0,5 cm beabstandet vom Randbereich B des linken bzw. rechten Castfilmrandes 2a, 2b oberhalb des Kühlwalzenbereichs A, also oberhalb der nicht vom Castfilm 2 bedeckten Oberfläche 6a der Kühlwalze 5 enden.

Die Elektrodenanordnung 15 ist durch die Isolatoranordnung 20 hindurchgeführt. Die Isolatoranordnung 20 ist in diesem Fall rohrförmig. Es wird auf Figur 9 und die entsprechenden Erläuterungen zu dieser verwiesen.

Es wäre auch möglich, dass in Draufsicht auf die Elektrodenanordnung 15 die Isolatoranordnung 20 deckungsgleich über zumindest eine Teillänge der Elektrodenanordnung 15 zu dieser angeordnet ist, wobei die Isolatoranordnung 20 näher an der Kühlwalze 5 angeordnet ist als die Elektrodenanordnung 15.

Die Steuereinrichtung 25 ist dazu ausgebildet, die Antriebseinrichtung 26 derart anzusteuern, dass das linke bzw. rechte Isolatorelement 20a, 20b der Isolatoranordnung 20 auch bei wechselnder Breite des Castfilms 2 bzw. bei einer sich verändernden Breite des Einsprungs E weiterhin im Bereich des Randbereichs B des ersten bzw. zweiten Castfilmrandes 2a, 2b endet.

Die Antriebseinrichtung 26, also der linke Antriebsmotor 26a und der rechte Antriebsmotor 26b sind vorzugsweise Schrittmotoren bzw. Servomotoren.

Die Steuereinrichtung 25 ist beim Starten der Anlage 1 dazu ausgebildet, das linke und das rechte Isolatorelement 20a, 20b in Richtung der Mitte 5c der Kühlwalze 5 zu verfahren.

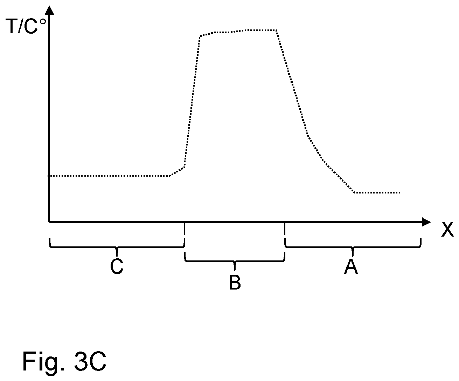

Ein solcher beispielhafter Temperaturverlauf ist für die Bereiche A, B und C in Figur 3C dargestellt. Die horizontale Achse (Abszisse) verläuft parallel zur Längsachse der Kühlwalze 5. Der Normalbereich C des Castfilms 2 weist dabei eine Temperatur auf, die oberhalb der Temperatur der Oberfläche 6a der Kühlwalze 5 liegt. Der Randbereich B des linken und rechten Castfilmrandes 2a, 2b weist dagegen eine (deutlich) höhere Temperatur gegenüber dem Normalbereich C auf. Der Temperaturverlauf steigt vom Normalbereich C hin zum Randbereich B an und fällt am Übergang vom Randbereich B hin zur Oberfläche 6a (Kühlwalzenbereich A) der Kühlwalze 5 wieder ab.

Um den linken beziehungsweiserechten Castfilmrand 2a, 2b zu detektieren umfasst die Anlage 1 gemäß Figur 4 eine Sensorvorrichtung 30. Die Sensorvorrichtung 30 ist dazu ausgebildet, um fortlaufend den linken und den rechten Castfilmrand 2a, 2b zu ermitteln. Grundsätzlich könnte auch die Relativlage des linken und des rechten Castfilmrandes 2a, 2b bezogen auf den Kühlwalzenmantel 6 beziehungsweise bezogen auf die linke beziehungsweise rechte Stirnseite 5a, 5b der Kühlwalze 5 ermittelt werden. Die Steuereinrichtung 25 ist dann zur Vermeidung von Spannungsüberschlägen zwischen der Elektrodenanordnung 15 und der Kühlwalze 5 dazu ausgebildet, anhand des durch die Sensorvorrichtung 30 ermittelnden linken Castfilmrandes 2a und des ermittelnden rechten Castfilmrandes 2b die Isolatoranordnung 20 derart zu verfahren, dass sich die Isolatoranordnung 20 zwischen der linken Stirnseite 5a der Kühlwalze 5 und dem linken Castfilmrand 2a beziehungsweise zwischen der rechten Stirnseite 5b der Kühlwalze 5 und dem rechten Castfilmrand 2b befindet. Die gestrichelte Verbindung zur Steuereinrichtung 25 deutet wieder daraufhin, dass die Steuereinrichtung 25 mit der Sensorvorrichtung 30 zum Datenaustausch in Verbindung steht. Die Sensoreinrichtung 30 kann Messwerte an die Steuereinrichtung 25 übertragen.

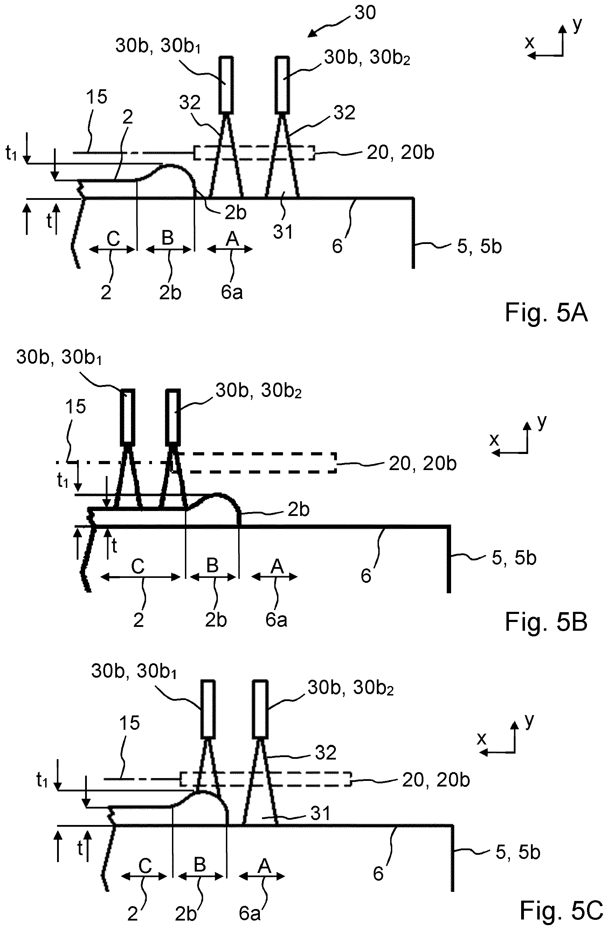

Besonders bedeutsam ist, dass ein Sensorbereich 31 (siehe Figur 5A) der Sensorvorrichtung 30 in Austragsrichtung des Castfilms 2 zur Breitschlitzdüse 4 nachlaufend und zur Elektrodenanordnung 15 vorlaufend angeordnet ist. Die Sensorvorrichtung 30 ist vorzugsweise ebenfalls in diesem Bereich, also in Bewegungsrichtung des Castfilms 2 zwischen der Breitschlitzdüse 4 und der Elektrodenanordnung 15 vorgesehen. Dies hat den bedeutenden Vorteil, dass der linke und der rechte Castfilmrand 2a, 2b schon zu einem Zeitpunkt detektiert werden können, bevor der Castfilm 2 unterhalb der Elektrodenanordnung 15 hindurchläuft. Dadurch, dass der linke und der rechte Castfilmrand 2a, 2b besonders früh detektiert beziehungsweise ermittelt werden, ist es der Steuereinrichtung 25 bei einer Änderung des Einsprungs E noch möglich, die Antriebseinrichtung 26 derart schnell anzusteuern, dass die Isolatoranordnung 20 mit dem linken und dem rechten Isolatorelement 20a, 20b derart verfahren werden, dass es zu keinem Überschlag zwischen der Elektrodenanordnung 15 und der Kühlwalze 5 aufgrund des geänderten Einsprungs E kommt.

Es wäre allerdings auch denkbar, dass der Sensorbereich 31 der Sensorvorrichtung 30 nachlaufend zur Elektrodenanordnung 15 angeordnet ist. In diesem Fall läuft der Castfilm 2 unterhalb der Elektrodenanordnung 15 hindurch und wird erst danach von der Elektrodenanordnung 15 detektiert. Insbesondere wird hier wieder der linke bzw. rechte Castfilmrand 2a, 2b detektiert. Die Sensorvorrichtung 30 wäre vorzugsweise ebenfalls in diesem Bereich vorgesehen. Bei dieser könnte es sich beispielsweise um eine oder mehrere Kameras 35 handeln. Zusätzlich können hier noch weitere Sensorvorrichtungen 30 eingesetzt werden.

Die Sensorvorrichtung 30 umfasst gemäß Figur 4 zur Erfassung des linken Castfilmrandes 2a eine linke Sensoreinrichtung 30a und zur Erfassung des rechten Castfilmrandes 2b eine rechte Sensoreinrichtung 30b.

In dem Dargestellten Ausführungsbeispiel aus Figur 4 umfasst die linke Sensoreinrichtung jeweils einen ersten IR-Sensor 30a₁ und einen zweiten IR-Sensor 30a₂. Die rechte Sensoreinrichtung 30b umfasst ebenfalls jeweils einen ersten IR-Sensor 30b₁ und einen zweiten IR-Sensor 30b₂. Die Sensorbereiche 31 des ersten und zweiten IR-Sensors 30a₁, 30a₂ der linken Sensoreinrichtung 30a sind in Längsrichtung X der Kühlwalze 5 versetzt, und insbesondere überwiegend oder vollständig überlappungsfrei zueinander angeordnet. Dabei ist der Sensorbereich 31 des zweiten IR-Sensors 30a₂ der linken Sensoreinrichtung 30a näher an der linken Stirnseite 5a der Kühlwalze 5 angeordnet als der Sensorbereich 31 des ersten IR-Sensors 30a₁ der linken Sensoreinrichtung 30a. Der erste IR-Sensor 30a₁ der linken Sensoreinrichtung 30a kann auch als innerer IR-Sensor 30a₁ bezeichnet werden. Der zweite IR-Sensor 30a₂ der linken Sensoreinrichtung 30a kann dagegen als äußerer IR-Sensor 30a₂ der linken Sensoreinrichtung 30a bezeichnet werden. Grundsätzlich können auch die ersten und zweiten IR-Sensoren 30a₁, 30a₂ der linken Sensoreinrichtung 30a insgesamt in Längsrichtung X der Kühlwalze 5 versetzt zueinander angeordnet sein.

Für den ersten und zweiten IR-Sensor 30b₁, 30b₂ der rechten Sensoreinrichtung 30b gilt dasselbe. Diese sind ebenfalls in Längsrichtung der Kühlwalze 5 versetzt zueinander angeordnet, wobei der Sensorbereich 31 des zweiten IR-Sensors 30b₂ der rechten Sensoreinrichtung 30b näher an der rechten Stirnseite 5b der Kühlwalze 5 angeordnet ist als der Sensorbereich 31 des ersten IR-Sensors 30b₁ der rechten Sensoreinrichtung 30b. Diese Sensorbereiche 31 sind ebenfalls vorzugsweise überwiegend oder vollständig überlappungsfrei zueinander angeordnet.

Bei den Sensorbereichen 31 des ersten und zweiten IR-Sensors 30a₁, 30a₂ beziehungsweise 30b₁, 30b₂ der linken und rechten Sensorreinrichtung 30a, 30b handelt es sich um punktförmige Sensorbereiche 31. Die Sensorbereiche 31 sollten sich möglichst wenig stark aufspreizen, weshalb die linke und rechte Sensoreinrichtung 30a, 30b möglichst nahe an der Kühlwalze 5 beziehungsweise dem Castfilm 2 angeordnet sein sollte. Vorzugsweise sind diese weniger als 100 cm, 80 cm, 70 cm, 50 cm, 40 cm, 30 cm, 20 cm, 10cm oder 5 cm von der Kühlwalze 5 entfernt angeordnet. Hier ist allerdings darauf zu achten, dass die Sensorvorrichtung 30 nicht durch zu hohe Temperaturen beschädigt wird. Grundsätzlich könnte die Sensorvorrichtung 30 und damit die linke bzw. rechte Sensorreinrichtung 30a, 30b ein entsprechendes Gehäuse aufweisen, welches über eine nicht dargestellte Kühleinrichtung temperiert wird.

Der Sensorstrahl 32 der jeweiligen IR-Sensoren 30a₁, 30a₂ beziehungsweise 30b₁, 30b₂ der linken und rechten Sensoreinrichtung 30a, 30b trifft vorzugsweise unter einem Winkel von 90° auf die Kühlwalze 5 auf. Hiervon abweichende Winkel sind ebenfalls denkbar. So könnte der Sensorstrahl 32 des jeweiligen IR-Sensors 30a₁, 30a₂, 30b₁, 30b₂ der linken und der rechten Sensoreinrichtung 30a, 30b auch unter einem Winkel auf die Oberfläche 6a der Kühlwalze 5 auftreffen, wobei der Winkel größer ist als 75°, 80°, 85°, 90°, 95°, 100°, 105°, 110°, 115°, 120°, 125° oder 130° und wobei der Winkel kleiner ist als 140°, 135°, 130°, 125°, 120°, 115°, 110°, 105°, 100°, 95°, 90°, 85°, 80° oder 75°.

Bevorzugt ist die linke Sensoreinrichtung 30a synchron zu dem linken Isolatorelement 20a verfahrbar. Selbiges gilt auch für die rechte Sensoreinrichtung 30b, welche vorzugsweise synchron zu dem rechten Isolatorelement 20b verfahrbar ist. Die einzelnen IR-Sensoren 30a₁, 30a₂ der linken Sensoreinrichtung 30a sind vorzugweise nicht gegeneinander verfahrbar. Selbiges gilt auch für die einzelnen IR-Sensoren 30b₁, 30b₂ der rechten Sensoreinrichtung 30b. Die einzelnen IR-Sensoren 30a₁, 30a₂ der linken Sensoreinrichtung 30a und/oder die einzelnen IR-Sensoren 30b₁, 30b₂ der rechten Sensoreinrichtung 30b könnten allerdings auch einzeln gegeneinander und/oder gegenüber den IR-Sensoren 30a₁, 30a₂, 30b₁, 30b₂ der anderen Sensoreinrichtung 30a, 30b verschoben werden. Es können genau zwei IR-Sensoren 30a₁, 30a₂ bzw. 30b₁, 30b₂ in der linken und in der rechten Sensoreinrichtung 30a, 30b verwendet werden. Es können allerdings auch mehr als zwei dieser IR-Sensoren 30a₁, 30a₂ bzw. 30b₁, 30b₂ verwendet werden. Es könnte auch möglich sein, dass nur ein IR-Sensor 30a₁, 30a₂, 30b₁, 30b₂ pro Sensoreinrichtung 30a, 30b verwendet wird. Dies würde insbesondere im Rahmen eines Notlaufprogramms geschehen, wenn ein anderer IR-Sensor 30a₁, 30a₂, 30b₁, 30b₂ der jeweiligen Sensoreinrichtung 30a, 30b ausgefallen ist. Bei Ausfall eines solchen IR-Sensor 30a₁, 30a₂, 30b₁, 30b₂ wird vorzugsweise ein akustischer und/oder visueller Alarm ausgegeben.

Die Figuren 5A bis 5D erläutern die Arbeitsweise der erfindungsgemäßen Anlage 1 zur Erzeugung des Castfilms 2. Die Steuereinrichtung 25 ist dazu ausgebildet, die Messwerte des ersten und zweiten IR-Sensors 30a₁ und 30a₂ bzw. 30b₁, 30b₂ der linken und rechten Sensoreinrichtung 30a, 30b zu erfassen. Bezogen auf Figur 5A ist dargestellt, dass beide IR-Sensoren 30b₁, 30b₂ der rechten Sensoreinrichtung 30b eine Temperatur der Oberfläche 6a der Kühlwalze 5 erfassen, die nicht durch den Castfilm 2 bedeckt ist. Die IR-Sensoren 30b₁, 30b₂ sind dabei sind synchron zu dem rechten Isolatorelement 20b verfahrbar angeordnet. In Figur 5A ist das rechte Isolatorelement 20b in Richtung der Mitte 5c der Kühlwalze 5 zu verfahren, weil die Messwerte des ersten und zweiten IR-Sensors 30b₁, 30b₂ der rechten Sensoreinrichtung 30b unterhalb eines ersten Temperaturschwellwerts liegen. Dieser erste Temperaturschwellwert wird auf einen Temperaturwert festgelegt, der zwischen der Temperatur des Castfilms 2 im Normalbereich C und einer Temperatur im Kühlwalzenbereich A der Kühlwalze 5 liegt. Die Steuereinrichtung 25 ist daher dazu ausgebildet, das rechte Isolatorelement 20b weiter in Richtung der Mitte 5c der Kühlwalze 5 zu verfahren.

Figur 5B zeigt eine gegenteilige Anordnung. Der erste und der zweite IR-Sensor 30b₁, 30b₂ erfassen die Temperatur des Castfilms 2 im Normalbereich C. Die Steuereinrichtung 25 ist in diesem Fall dazu ausgebildet, das rechte Isolatorelement 20b in Richtung der rechten Stirnseite 5b der Kühlwalze 5 zu verfahren, weil die Messwerte des ersten und zweiten IR-Sensors 30b₁, 30b₂ der rechten Sensoreinrichtung 30b oberhalb eines zweiten Temperaturschwellwerts liegen. Dieser zweite Temperaturschwellwert kann identisch zu dem ersten Temperaturschwellwert sein. Vorzugsweise liegt der zweite Temperaturschwellwert oberhalb des ersten Temperaturschwellwerts. Der zweite Temperaturschwellwert liegt allerdings vorzugsweise ebenfalls zwischen der Temperatur an der Oberfläche 6a der Kühlwalze 5 und der Temperatur des Castfilms 2 in seinem Normalbereich C.

Bezugnehmend auf die Figur 5C ist dargestellt, dass das rechte Isolatorelement 20b in seiner Position belassen werden soll. Dies liegt daran, weil ein Messwert des ersten IR-Sensors 30b₁ der rechten Sensoreinrichtung 30b von einem Messwert des zweiten IR-Sensors 30b₂ der rechten Sensoreinrichtung 30b um einen vorbestimmten Grenzwert abweicht. In dem dargestellten Ausführungsbeispiel detektiert der erste IR-Sensor 30b₁ eine Temperatur am rechten Castfilmrand 2b, wohingegen der zweite IR-Sensor 30b₂ eine Temperatur an der Oberfläche 6a der Kühlwalze 5 detektiert. Das rechte Isolatorelement 20b endet dabei in etwa auf der Höhe des rechten Castfilmrandes 2b.

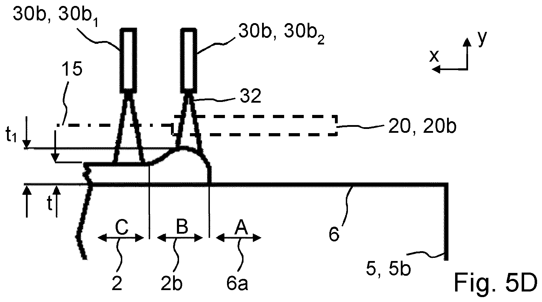

Grundsätzlich könnte es auch sein, dass der erste IR-Sensor 30b₁ die Temperatur im Normalbereich C des Castfilms 2 detektiert, wohingegen der zweite IR-Sensor 30b₂ die Temperatur am rechten Castfilmrand 2 detektiert. Dieser Sachverhalt ist in Figur 5D dargestellt. Auch hier kann das rechte Isolatorelement 20b in seiner Position belassen werden.

Die gemachten Ausführungen gelten ebenfalls für den ersten und zweiten IR-Sensor 30a₁, 30a₂ der linken Sensoreinrichtung 30a bezogen auf den linken Castfilmrand 2a und das linke Isolatorelement 20a.

Der erste und zweite IR-Sensor 30a₁, 30a₂ der linken Sensoreinrichtung 30a können in einem gemeinsamen, vorzugsweise gekühltem, Gehäuse angeordnet sein. Selbiges kann auch für den ersten und zweiten IR-Sensor 30b₁, 30b₂ der rechten Sensoreinrichtung 30b gelten.

Grundsätzlich ist die Steuereinrichtung 25 dazu ausgebildet, das rechte Isolatorelement 20b in seiner Position zu belassen, wenn ein Messwert des ersten IR-Sensors 30b₁ der rechten Sensoreinrichtung 30b oberhalb des zweiten Temperaturschwellwerts, aber unterhalb eines dritten Temperaturschwellwerts liegt und wenn ein Messwert des zweiten IR-Sensors 30b₂ der rechten Sensoreinrichtung 30b oberhalb des dritten Temperaturschwellwerts oder unterhalb des ersten Temperaturschwellwerts liegt. Der dritte Temperaturschwellwert liegt dabei oberhalb der durchschnittlichen Temperatur des Normalbereichs C des Castfilms 2. Insbesondere liegt er ungefähr in der Mitte zwischen der Temperatur des Normalbereiches C des Castfilms 2 und der Temperatur im jeweiligen Randbereich B des Castfilms 2. Dieser Sachverhalt ist in Figur 5D dargestellt. Die Steuereinrichtung 25 ist auch dann dazu ausgebildet, das rechte Isolatorelement 20b in seiner Position zu belassen, wenn ein Messwert des ersten IR-Sensors 30b₁ der rechten Sensoreinrichtung 30b oberhalb des dritten Temperaturschwellwerts liegt und wenn ein Messwert des zweiten IR-Sensors 30b₂ der rechten Sensoreinrichtung 30b unterhalb des ersten Temperaturschwellwerts liegt. Dieser Sachverhalt ist in Figur 5C dargestellt. In diesem Fall misst der erste IR-Sensor 30b₁ die Temperatur am rechten Castfilmrand 2b und der zweite IR-Sensor 30b₂ die Temperatur der Oberfläche 6a der Kühlwalze 5.

Die gemachten Ausführungen gelten ebenfalls für den ersten und zweiten IR-Sensor 30a₁, 30a₂ der linken Sensoreinrichtung 30a.

Zusammenfassend ist hier zu sagen, dass der erste und zweite IR-Sensor 30a₁, 30a₂ der linken Sensoreinrichtung 30a einen Temperaturwert entweder von dem Normalbereich C des Castfilms 2 oder von dem Randbereich B des Castfilms 2 oder von dem Kühlwalzenbereich A der Kühlwalze 5 messen können. Die Steuereinrichtung 25 ist dazu ausgebildet, das linke Isolatorelement 20a in Richtung der Mitte 5c der Kühlwalze 5 zu verfahren, wenn beide IR-Sensoren 30a₁, 30a₂ die Temperatur des Kühlwalzenbereichs A messen bzw. das linke Isolatorelement 20a in Richtung der linken Stirnseite 5a der Kühlwalze 5 zu verfahren, wenn beide IR-Sensoren 30a₁, 30a₂ die Temperatur des Normalbereichs C des Castfilms 2 messen. Messen beide IR-Sensoren 30a₁, 30a₂ Temperaturen von unterschiedlichen Bereichen A, B, C, dann kann das linke Isolatorelement 20a in seiner Position verweilen. Selbiges gilt auch für die rechte Sensoreinrichtung 30b mit beiden IR-Sensoren 30b₁, 30b₂.

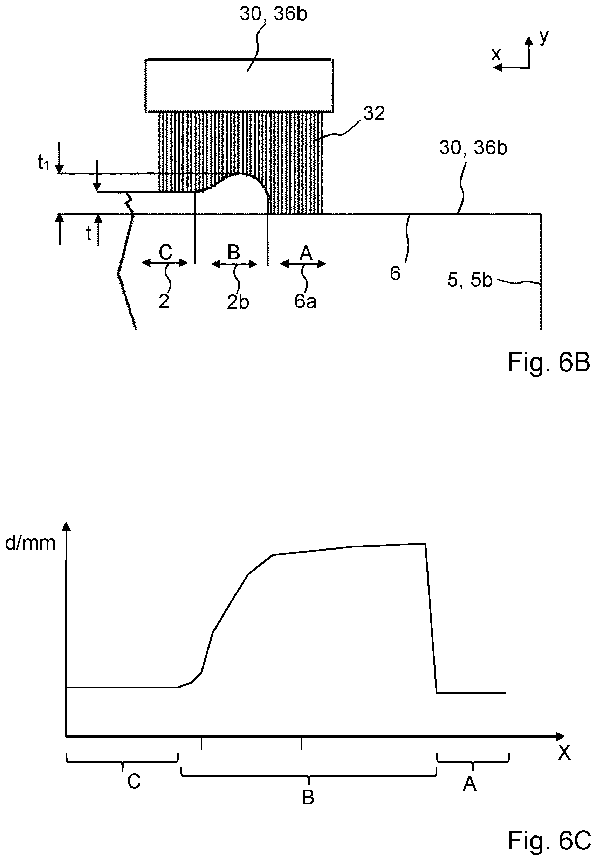

Die Figuren 6A, 6B und 6C zeigen eine andere Ausführungsform der Sensorvorrichtung 30. Diese umfasst in diesem Fall einen linken Laserscanner 36a und einen rechten Laserscanner 36b. Der linke Laserscanner 36a ist im Bereich des linken Castfilmrandes 2a angeordnet und dazu ausgebildet, den Abstand zum Castfilm 2 oder eine Dicke des Castfilms 2 zu messen, wobei die Steuereinrichtung 25 dazu ausgebildet ist, anhand dieses Messergebnisses fortlaufend den linken Castfilmrand 2a zu ermitteln und das linke Isolatorelement 20a entsprechend in Richtung der Mitte 5c der Kühlwalze 5 oder von der Mitte 5c der Kühlwalze 5 weg in Richtung der linken Stirnseite 5a der Kühlwalze 5 zu verfahren.

Selbiges gilt auch für den rechten Laserscanner 36b. Dieser ist im Bereich des rechten Castfilmrandes 2b angeordnet und dazu ausgebildet, den Abstand zum Castfilm 2 bzw. eine Dicke des Castfilms 2 zu messen, wobei die Steuereinrichtung 25 dazu ausgebildet ist, fortlaufend den rechten Castfilmrand 2b zu ermitteln.

Im Hinblick auf Figur 6B ist dargestellt, dass der Randbereich B des linken bzw. rechten Castfilmrandes 2a, 2b eine höhere Dicke aufweist als der Normalbereich C des Castfilms 2.

Anhand des gemessenen Dickenverlaufs (entlang der Längsrichtung der Kühlwalze 5) kann der Randbereich B des Castfilms 2 genau bestimmt und das linke bzw. rechte Isolatorelement 20a bzw. 20b derart verfahren werden, dass dieses oberhalb des Randbereichs B des Castfilms 2 zum Stehen kommt.

Figur 6C zeigt nochmals den unterschiedlichen Dickenverlauf. Der größte Abstand zum Laserscanner 32a, 32b wird im Kühlwalzenbereich A gemessen, der geringste Abstand zum Laserscanner 32a, 32a dagegen im Randbereich B. Dazwischen liegt der Normalbereich C.

Der Vorteil des Einsatzes der Laserscanner 32a, 32b ist, dass diese bevorzugt stationär angeordnet sind. Sie sind weiter vorzugsweise parallel zur Längsachse der Kühlwalze 5 angeordnet.

In Figur 7 ist noch ein weiteres Ausführungsbeispiel der erfindungsgemäßen Anlage 1 dargestellt, wobei in diesem Ausführungsbeispiel die Sensorvorrichtung 30 in Form eines linken und eines rechten Laser-Entfernungsmessers 33a, 33b gebildet ist. Der in Figur 7 dargestellte rechte Laser-Entfernungsmesser 33b ist beabstandet zur Kühlwalze 5 angeordnet und derart ausgerichtet, dass sein Laserstrahl 34 parallel zur Oberfläche 6a der Kühlwalze 5 verläuft und auf den rechten Randbereich B, also den rechten Castfilmrand 2b (seitlich) auftrifft. Der rechte Laser-Entfernungsmesser 33b ist dazu ausgebildet, eine Entfernung zu diesem rechten Randbereich B, also dem rechten Castfilmrand 2b zu messen und an die Steuereinrichtung 25 zu übermitteln. Diese ist wiederum dazu ausgebildet, anhand dieses Messergebnisses fortlaufend den rechten Castfilmrand 2b zu ermitteln und in diesem Fall das rechte Isolatorelement 20b derart zu verfahren, dass dieses über dem rechten Castfilmrand 2b zum Stehen kommt. Der Vorteil des Einsatzes eines solchen Laser-Entfernungsmessers 33b ist, dass dieser weiter von der Kühlwalze 5 beabstandet angeordnet werden kann und er deshalb keinen hohen Temperaturen ausgesetzt ist.

Die gemachten Ausführungen für den rechten Laser-Entfernungsmesser 33b gelten ebenfalls für den linken Laser-Entfernungsmesser 33a, der auf den linken Castfilmrand 2a trifft.

Die Figuren 8A und 8B zeigen noch ein weiteres Ausführungsbeispiel der erfindungsgemäßen Anlage. In diesem Fall ist die Sensorvorrichtung 30 in Form von Kameras 35 gebildet. In einem ersten Anwendungsfall I umfasst die Sensorvorrichtung 30 eine Kamera 35, die derart angeordnet und ausgebildet ist, dass sie auf einen Bereich der Kühlwalze 5 gerichtet ist, der zwischen dem Auftreffbereich 9 der Kunststoffschmelze 7 und der Elektrodenanordnung 15 liegt und die gesamte Breite (gepunktete Linie) des Castfilms 2 aufnimmt. Die Steuereinrichtung 25 ist dann dazu ausgebildet, anhand dieser Aufnahmen fortlaufend den linken und den rechten Castfilmrand 2a, 2b zu ermitteln. Bei der Kamera 35 handelt es sich in diesem Fall um eine Zeilenkamera.

In einem zweiten Anwendungsfall II wäre es auch möglich, dass die Sensorvorrichtung zwei Kameras umfasst, die derart angeordnet und ausgebildet sind, dass diese jeweils auf den linken Castfilmrand 2a bzw. den rechten Castfilmrand 2b gerichtet sind. Die Steuereinrichtung 25 ist dann dazu ausgebildet, anhand dieser Aufnahmen fortlaufend den linken Castfilmrand 2a bzw. den rechten Castfilmrand 2b zu ermitteln. Bei den Kameras handelt es sich bevorzugt um Zeilenkameras.

In einem dritten Anwendungsfall III wäre es auch möglich, dass die Kamera 35 auf einen Bereich zwischen der Breitschlitzdüse 4 und dem Auftreffbereich 9 der Kunststoffschmelze 7 auf der Kühlwalze 5 gerichtet ist. In diesem Fall könnte sie ebenfalls vorzugsweise die gesamte Breite des Castfilms 2 aufnehmen und z.B. als Zeilenkamera ausgebildet sein, wobei die Steuereinrichtung 25 wieder dazu ausgebildet ist, anhand dieser Aufnahmen fortlaufend den linken und den rechten Castfilmrand 2a, 2b zu ermitteln. In diesem Fall würde vorzugsweise eine Durchlichtmessung stattfinden.

Auch hier wäre wiederum der Einsatz von zwei Kameras denkbar (nicht dargestellt), wobei eine erste Kamera den linken Castfilmrand 2a mittels der Durchlichtmessung detektiert und eine zweite Kamera den rechten Castfilmrand 2b mittels einer Durchlichtmessung.

Ein vierter Anwendungsfall IV entspricht dem ersten Anwendungsfall I. Im Unterschied zu dem ersten Anwendungsfall I ist die Kamera 35 beim vierten Anwendungsfall IV eine Flächenkamera.

Ein fünfter Anwendungsfall V entspricht dem zweiten Anwendungsfall II. Im Unterschied zu dem zweiten Anwendungsfall II sind die erste und zweite Kamera 35 beim fünften Anwendungsfall V Flächenkameras.

Die Kamera 35 bzw. die erste und/oder die zweite Kamera sind dazu ausgebildet, im Wellenlängenbereich von sichtbarem Licht (ca. 400 nm bis 750 nm) zu arbeiten. Sie könnten auch im Infrarotbereich arbeiten.

Die Kamera 35 bzw. die erste und/oder die zweite Kamera können als Zeilenkamera oder als Flächenkamera ausgebildet sein. Sie sind bevorzug genauso wieder der Laser-Entfernungsmesser 33a, 33b stationär angeordnet.

Vorzugsweise ist ein Abstand der Elektrodenanordnung 15 zur Kühlwalze 5 zumindest über die Breite des Castfilms 2 konstant.

Vorzugsweise ist die Elektrodenanordnung 15 frei von einem Luftführungskanal.

Vorzugsweise ist die Sensorvorrichtung 30 eine optische Sensorvorrichtung.

Vorzugsweise sind die Sensorbereiche 31 des ersten und zweiten IR-Sensors 30a₁, 30a₂, 30b₁, 30b₂ der linken und der rechten Sensoreinrichtung 30a, 30b punktförmige Sensorbereiche.

Vorzugsweise ist die Steuereinrichtung 25 dazu ausgebildet, das linke Isolatorelement 20a in seiner Position zu belassen, wenn:
a) ein Messwert des ersten IR-Sensors 30a₁ der linken Sensoreinrichtung 30a oberhalb des zweiten Temperaturschwellwerts und unterhalb eines dritten Temperaturschwellwerts liegt und wenn ein Messwert des zweiten IR-Sensors 30a₂ der linken Sensoreinrichtung 30a oberhalb des dritten Temperaturschwellwerts oder unterhalb des ersten Temperaturschwellwerts liegt; oder
b) ein Messwert des ersten IR-Sensors 30a₁ der linken Sensoreinrichtung 30a oberhalb des dritten Temperaturschwellwerts liegt und wenn ein Messwert des zweiten IR-Sensors 30a₂ der linken Sensoreinrichtung 30a unterhalb des ersten Temperaturschwellwerts liegt;
Ergänzend oder alternativ ist die Steuereinrichtung 25 dazu ausgebildet, das rechte Isolatorelement 20b in seiner Position zu belassen, wenn:
a) ein Messwert des ersten IR-Sensors 30b₁ der rechten Sensoreinrichtung 30b oberhalb des zweiten Temperaturschwellwerts aber unterhalb eines dritten Temperaturschwellwerts liegt und wenn ein Messwert des zweiten IR-Sensors 30b₂ der rechten Sensoreinrichtung 30b oberhalb des dritten Temperaturschwellwerts oder unterhalb des ersten Temperaturschwellwerts liegt; oder
b) ein Messwert des ersten IR-Sensors 30b₁ der rechten Sensoreinrichtung 30b oberhalb des dritten Temperaturschwellwerts liegt und wenn ein Messwert des zweiten IR-Sensors 30b₂ der rechten Sensoreinrichtung 30b unterhalb des ersten Temperaturschwellwerts liegt.

Vorzugsweise umfasst die Sensorvorrichtung 30 eine Kamera 35, die derart angeordnet und ausgebildet ist, dass sie:
a) auf einen Bereich der Kühlwalze 5 gerichtet ist, der zwischen dem Auftreffbereich 9 der Kunststoffschmelze 7 und der Elektrodenanordnung 15 liegt und die gesamte Breite des Castfilms 2 aufnimmt, wobei die Steuereinrichtung 25 dazu ausgebildet ist, anhand dieser Aufnahmen fortlaufend den linken und den rechten Castfilmrand 2a, 2b zu ermitteln; oder
b) auf einen Bereich zwischen der Breitschlitzdüse 4 und dem Auftreffbereich 9 der Kunststoffschmelze 7 auf der Kühlwalze 5 gerichtet ist und die gesamte Breite des Castfilms 2 aufnimmt, wobei die Steuereinrichtung 25 dazu ausgebildet ist, anhand dieser Aufnahmen fortlaufend den linken und den rechten Castfilmrand 2a, 2b zu ermitteln.

Vorzugsweise sind die Kamera 35 oder die erste und/oder die zweite Kamera dazu ausgebildet, im Wellenlängenbereich von sichtbarem Licht zu arbeiten. Alternativ sind die Kamera 35 oder die erste und/oder die zweite Kamera dazu ausgebildet, im Infrarotbereich zu arbeiten.

Vorzugsweise ist die Kamera 35 oder die erste und/oder die zweite Kamera eine Zeilenkamera. Alternativ ist die Kamera 35 oder die erste und/oder die zweite Kamera eine Flächenkamera.

Vorzugsweise ist die Kamera 35 oder die erste und/oder die zweite Kamera stationär angeordnet.

Vorzugsweise sind der linke Laserscanner 36a und der rechte Laserscanner 36b stationär angeordnet.

Vorzugsweise umfasst die Sensorvorrichtung 30 ein Schutzglas oder einer Vorsatzlinse, die vor der Sensoroberfläche angeordnet ist und die Sensoroberfläche vor Verschmutzung schützt.

Vorzugsweise umfasst die Sensorvorrichtung 30 ein Gehäuse, wobei das Gehäuse durch eine Kühleinrichtung kühlbar ist.

Die Erfindung ist nicht auf die beschriebenen Ausführungsbeispiele beschränkt. Im Rahmen der Erfindung sind alle beschriebenen und/oder gezeichneten Merkmale beliebig miteinander kombinierbar.

## Patentansprüche

1. Anlage (1) zur Herstellung eines Castfilms (2) für eine Folienreckanlage (3), mit den folgenden Merkmalen:
- es sind eine Breitschlitzdüse (4), eine Kühlwalze (5) mit einem zwischen zwei gegenüberliegenden Stirnseiten (5a, 5b) der Kühlwalze (5) verlaufenden Kühlwalzenmantel (6), eine Elektrodenanordnung (15), eine Hochspannungserzeugungseinrichtung, eine Isolatoranordnung (20), eine Sensorvorrichtung (30) und eine Steuereinrichtung (25) vorhanden;
- die Breitschlitzdüse (4) ist dazu ausgebildet, eine Kunststoffschmelze (7) auf einen Auftreffbereich (9) der Oberfläche (6a) der rotierenden Kühlwalze (5) auszugeben, wodurch ein Castfilm (2) gebildet wird;
- an einem Abziehbereich (10) der Kühlwalze (5), der in Rotationsrichtung der Kühlwalze (5) versetzt zu dem Auftreffbereich (9) angeordnet ist, ist der Castfilm (2) von der Oberfläche (6a) der Kühlwalze (5) abziehbar und mittelbar oder unmittelbar einer Folienreckanlage (3) zuführbar;
- zwischen dem Auftreffbereich (9) und dem Abziehbereich (10) der Kühlwalze (5) ist die Elektrodenanordnung (15) angeordnet;
- die Elektrodenanordnung (15) verläuft beabstandet zur Oberfläche (6a) der Kühlwalze (5) zumindest in einer Teillänge der Kühlwalze (5) zwischen den beiden Stirnseiten (5a, 5b) der Kühlwalze (5);
- die Hochspannungserzeugungseinrichtung ist dazu ausgebildet eine Hochspannung zu erzeugen und an der Elektrodenanordnung (15) anzulegen;
- die Isolatoranordnung (20) ist zwischen der Elektrodenanordnung (15) und dem Kühlwalzenmantel (6) der Kühlwalze (5) angeordnet;
- die Sensorvorrichtung (30) ist dazu ausgebildet, fortlaufend den linken und den rechten Castfilmrand (2a, 2b) zu ermitteln;
- die Steuereinrichtung (25) ist zur Vermeidung von Spannungsüberschlägen zwischen der Elektrodenanordnung (15) und der Kühlwalze (5) dazu ausgebildet, anhand des ermittelnden linken Castfilmrandes (2a) und des ermittelnden rechten Castfilmrandes (2b) die Isolatoranordnung (20) derart zu verfahren, dass sich die Isolatoranordnung (20):
a) zwischen der linken Stirnseite (5a) der Kühlwalze (5) und dem linken Castfilmrand (2a); und
b) zwischen der rechten Stirnseite (5b) der Kühlwalze (5) und dem rechten Castfilmrand (2b) befindet;
- ein Sensorbereich (31) der Sensorvorrichtung (30) ist in Austragsrichtung des Castfilms (2) zur Breitschlitzdüse (4) nachlaufend und zur Elektrodenanordnung (15) vorlaufend vorgesehen;
- die Isolatoranordnung (20) umfasst ein linkes Isolatorelement (20a) und ein rechtes Isolatorelement (20b);
- das linke Isolatorelement (20a) ist von der linken Stirnseite (5a) der Kühlwalze (5) in Richtung der Mitte (5c) der Kühlwalze (5) und umgekehrt verfahrbar;
- das rechte Isolatorelement (20b) ist von der rechten Stirnseite (5b) der Kühlwalze (5) in Richtung der Mitte (5c) der Kühlwalze (5) und umgekehrt verfahrbar, wobei
- das linke und das rechte Isolatorelement (20a, 20b) unabhängig voneinander verfahrbar sind, wobei
a) das linke Isolatorelement (20a) rohrförmig ist, wobei die Elektrodenanordnung (15) in Form eines Bandes, eines Drahtes oder eines Stabes durch das rohrförmige linke Isolatorelement (20a) hindurchgeführt ist, und wobei
b) das rechte Isolatorelement (20b) rohrförmig ist, wobei die Elektrodenanordnung (15) in Form eines Bandes, eines Drahtes oder eines Stabes durch das rohrförmige rechte Isolatorelement (20b) hindurchgeführt ist.

2. Anlage (1) nach Anspruch 1, **gekennzeichnet durch** das folgende Merkmal:
- die Elektrodenanordnung (15) ist frei von einer elektrisch leifähigen Bürste, die den Castfilm (2) zumindest teilweise überdeckt.

3. Anlage (1) nach Anspruch 1, **gekennzeichnet durch** das folgende Merkmal:
- die Steuereinrichtung (25) ist bei Starten der Anlage (1) dazu ausgebildet das linke und das rechte Isolatorelement (20a, 20b) in Richtung der Mitte (5c) der Kühlwalze (5) zu verfahren.

4. Anlage (1) nach einem der vorherigen Ansprüche, **gekennzeichnet durch** das folgende Merkmal:
- die Sensorvorrichtung (30) umfasst zur Erfassung des linken Castfilmrandes (2a) eine linke Sensoreinrichtung (30a) und zur Erfassung des rechten Castfilmrandes (2b) eine rechte Sensoreinrichtung (30b).

5. Anlage (1) nach Anspruch 4, **gekennzeichnet durch** die folgenden Merkmale:
- die linke und die rechte Sensoreinrichtung (30a, 30b) umfassen jeweils einen ersten IR-Sensor (30a₁, 30b₁) und einen zweiten IR-Sensor (30a₂, 30b₂);
- die Sensorbereiche (31) des ersten und zweiten IR-Sensors (30a₁, 30a₂) der linken Sensoreinrichtung (30a) sind in Längsrichtung der Kühlwalze (5) versetzt zueinander angeordnet, wobei der Sensorbereich (31) des zweiten IR-Sensors (30a₂) der linken Sensoreinrichtung (30a) näher an der linken Stirnseite (5a) der Kühlwalze (5) angeordnet ist als der Sensorbereich (31) des ersten IR-Sensors (30a₁) der linken Sensoreinrichtung (30a);
- die Sensorbereiche (31) des ersten und zweiten IR-Sensors (30b₁, 30b₂) der rechten Sensoreinrichtung (30b) sind in Längsrichtung der Kühlwalze (5) versetzt zueinander angeordnet, wobei der Sensorbereich (31) des zweiten IR-Sensors (30b₂) der rechten Sensoreinrichtung (30b) näher an der rechten Stirnseite (5b) der Kühlwalze (5) angeordnet ist als der Sensorbereich (31) des ersten IR-Sensors (30b₁) der rechten Sensoreinrichtung (30b).

6. Anlage (1) nach Anspruch 5, **gekennzeichnet durch** die folgenden Merkmale:
- der Sensorbereich (31) des ersten IR-Sensors (30a₁) der linken Sensoreinrichtung (30a) ist überlappungsfrei zu dem Sensorbereich (31) des zweiten IR-Sensors (30a₂) der linken Sensoreinrichtung (30a) angeordnet;
- der Sensorbereich (31) des ersten IR-Sensors (30b₁) der rechten Sensoreinrichtung (30b) ist überlappungsfrei zu dem Sensorbereich (31) des zweiten IR-Sensors (30b₂) der rechten Sensoreinrichtung (30b) ausgerichtet.

7. Anlage (1) nach einem der Ansprüche 5 oder 6, **gekennzeichnet durch** das folgende Merkmal:
- ein Sensorstrahl (32) des jeweiligen IR-Sensors (30a₁, 30a₂, 30b₁, 30b₂) der linken und der rechten Sensoreinrichtung (30a, 30b) trifft unter einem Winkel auf die Oberfläche (6a) der Kühlwalze (5), wobei der Winkel größer ist als 75°, 80°, 85°, 90°, 95°, 100°, 105°, 110°, 115°, 120°, 125° oder 130° und wobei der Winkel kleiner ist als 140°, 135°, 130°, 125°, 120°, 115°, 110°, 105°, 100°, 95°, 90°, 85°, 80° oder 75°.

8. Anlage (1) nach einem der Ansprüche 5 bis 7 und nach Anspruch 1, **gekennzeichnet durch** die folgenden Merkmale:
- die linke Sensoreinrichtung (30a) ist synchron zu dem linken Isolatorelement (20a) verfahrbar;
- die rechte Sensoreinrichtung (30b) ist synchron zu dem rechten Isolatorelement (20b) verfahrbar.

9. Anlage (1) nach einem der Ansprüche 5 bis 8 und einem der Ansprüche 1 bis 3, **gekennzeichnet durch** die folgenden Merkmale:
- die Steuereinrichtung (25) ist dazu ausgebildet, die Messwerte des ersten und zweiten IR-Sensors (30a₁, 30a₂) der linken Sensoreinrichtung (30a) und die Messwerte des ersten und zweiten IR-Sensors (30b₁, 30b₂) der rechten Sensoreinrichtung (30b) zu erfassen;
- die Steuereinrichtung (25) ist dazu ausgebildet:
a) das linke Isolatorelement (20a) in Richtung Mitte (5c) der Kühlwalze (5) zu verfahren, wenn die Messwerte des ersten und zweiten IR-Sensors (30a₁, 30a₂) der linken Sensoreinrichtung (30a) unterhalb eines ersten Temperaturschwellwerts liegen; und/oder
das rechte Isolatorelement (20b) in Richtung der Mitte (5c) der Kühlwalze (5) zu verfahren, wenn die Messwerte des ersten und zweiten IR-Sensors (30b₁, 30b₂) der rechten Sensoreinrichtung (30b) unterhalb des ersten Temperaturschwellwerts liegen;
und/oder
b) das linke Isolatorelement (20a) in Richtung der linken Stirnseite (5a) der Kühlwalze (5) zu verfahren, wenn die Messwerte des ersten und zweiten IR-Sensors (30a₁, 30a₂) der linken Sensoreinrichtung (30a) oberhalb eines zweiten Temperaturschwellwerts liegen; und/oder
das rechte Isolatorelement (20b) in Richtung der rechten Stirnseite (5b) der Kühlwalze (5) zu verfahren, wenn die Messwerte des ersten und zweiten IR-Sensors (30b₁, 30b₂) der rechten Sensoreinrichtung (30b) oberhalb des zweiten Temperaturschwellwerts liegen;
und/oder
c) das linke Isolatorelement (20a) in seiner Position zu belassen, wenn ein Messwert des ersten IR-Sensors (30a₁) der linken Sensoreinrichtung (30a) von einem Messwert des zweiten IR-Sensors (30a₂) der linken Sensoreinrichtung (30a) um einen vorbestimmten Grenzwert abweicht; und/oder
das rechte Isolatorelement (20b) in seiner Position zu belassen, wenn ein Messwert des ersten IR-Sensors (30b₁) der rechten Sensoreinrichtung (30b) von einem Messwert des zweiten IR-Sensors (30b₂) der rechten Sensoreinrichtung (30b) um einen vorbestimmten Grenzwert abweicht.

10. Anlage (1) nach einem der Ansprüche 5 bis 8 und einem der Ansprüche 1 bis 3, **gekennzeichnet durch** die folgenden Merkmale:
- die Steuereinrichtung (25) ist dazu ausgebildet, die Messwerte des ersten und zweiten IR-Sensors (30a₁, 30a₂) der linken Sensoreinrichtung (30a) und die Messwerte des ersten und zweiten IR-Sensors (30b₁, 30b₂) der rechten Sensoreinrichtung (30b) zu erfassen, wobei die jeweiligen IR-Sensoren (30a₁, 30a₂, 30b₁, 30b₂) dazu ausgebildet sind, eine Temperatur eines Normalbereichs (C) des Castfilms (2), eine Temperatur eines Randbereichs (B) des Castfilms (2) und eine Temperatur eines Kühlwalzenbereichs (A) der Kühlwalze (2) zu messen;
- die Steuereinrichtung (25) ist dazu ausgebildet:
a) das linke Isolatorelement (20a) in Richtung Mitte (5c) der Kühlwalze (5) zu verfahren, wenn der erste und zweite IR-Sensor (30a₁, 30a₂) der linken Sensoreinrichtung (30a) die Temperatur des Kühlwalzenbereichs (A) messen; und/oder das rechte Isolatorelement (20b) in Richtung der Mitte (5c) der Kühlwalze (5) zu verfahren, wenn der erste und zweite IR-Sensor (30b₁, 30b₂) der rechten Sensoreinrichtung (30b) die Temperatur des Kühlwalzenbereichs (A) messen;
und/oder
b) das linke Isolatorelement (20a) in Richtung der linken Stirnseite (5a) der Kühlwalze (5) zu verfahren, wenn der erste und zweite IR-Sensor (30a₁, 30a₂) der linken Sensoreinrichtung (30a) die Temperatur des Normalbereichs (C) messen; und/oder das rechte Isolatorelement (20b) in Richtung der rechten Stirnseite (5b) der Kühlwalze (5) zu verfahren, wenn der erste und zweite IR-Sensor (30b₁, 30b₂) der rechten Sensoreinrichtung (30b) die Temperatur des Normalbereichs (C) messen;
und/oder
c) das linke Isolatorelement (20a) in seiner Position zu belassen, wenn der erste und zweite IR-Sensor (30a₁, 30a₂) der linken Sensoreinrichtung (30a) Temperaturen unterschiedlicher Bereiche (A, B, C) messen; und/oder
das rechte Isolatorelement (20b) in seiner Position zu belassen, wenn der erste und zweite IR-Sensor (30b₁, 30b₂) der rechten Sensoreinrichtung (30b) Temperaturen unterschiedlicher Bereiche (A, B, C) messen.

11. Anlage (1) nach einem der Ansprüche 1 bis 3, **gekennzeichnet durch** die folgenden Merkmale:
- die Sensorvorrichtung (30) umfasst zwei Kameras;
- die erste Kamera ist derart angeordnet und ausgebildet, dass sie
a) auf einen Bereich der Kühlwalze (5) gerichtet ist, der zwischen dem Auftreffbereich (9) der Kunststoffschmelze (7) und der Elektrodenanordnung (15) liegt und einen Bereich am linken Castfilmrand (2a) aufnimmt, wobei die Steuereinrichtung (25) dazu ausgebildet ist, anhand dieser Aufnahmen fortlaufend den linken Castfilmrand (2a) zu ermitteln; oder
b) auf einen Bereich zwischen der Breitschlitzdüse (4) und dem Auftreffbereich (9) der Kunststoffschmelze (7) auf der Kühlwalze (5) gerichtet ist und einen Bereich am linken Castfilmrand (2a) aufnimmt, wobei die Steuereinrichtung (25) dazu ausgebildet ist, anhand dieser Aufnahmen fortlaufend den linken Castfilmrand (2a) zu ermitteln;
und
- die zweite Kamera ist derart angeordnet und ausgebildet, dass sie
a) auf einen Bereich der Kühlwalze (5) gerichtet ist, der zwischen dem Auftreffbereich (9) der Kunststoffschmelze (7) und der Elektrodenanordnung (15) liegt und einen Bereich am rechten Castfilmrand (2b) aufnimmt, wobei die Steuereinrichtung (25) dazu ausgebildet ist, anhand dieser Aufnahmen fortlaufend den rechten Castfilmrand (2b) zu ermitteln; oder
b) auf einen Bereich zwischen der Breitschlitzdüse (4) und dem Auftreffbereich (9) der Kunststoffschmelze (7) auf der Kühlwalze (5) gerichtet ist und einen Bereich am rechten Castfilmrand (2b) aufnimmt, wobei die Steuereinrichtung (25) dazu ausgebildet ist, anhand dieser Aufnahmen fortlaufend den rechten Castfilmrand (2b) zu ermitteln.

12. Anlage (1) nach einem der Ansprüche 1 bis 3, **gekennzeichnet durch** die folgenden Merkmale:
- die Sensorvorrichtung (30) umfasst einen linken Laserscanner (36a) und einen rechten Laserscanner (36b);
- der linke Laserscanner (36a) ist im Bereich des linken Castfilmrandes (2a) angeordnet und dazu ausgebildet, den Abstand zum Castfilm (2) oder eine Dicke des Castfilms (2) zu messen, wobei die Steuereinrichtung (25) dazu ausgebildet ist, anhand dieses Messergebnisses fortlaufend den linken Castfilmrand (2a) zu ermitteln;
- der rechte Laserscanner (36b) ist im Bereich des rechten Castfilmrandes (2b) angeordnet und dazu ausgebildet den Abstand zum Castfilm (2) oder eine Dicke des Castfilms (2) zu messen, wobei die Steuereinrichtung (25) dazu ausgebildet ist, fortlaufend den rechten Castfilmrand (2b) zu ermitteln.

13. Anlage (1) nach einem der Ansprüche 1 bis 3, **gekennzeichnet durch** die folgenden Merkmale:
- die Sensorvorrichtung (30) umfasst einen linken Laser-Entfernungsmesser (33a) und einen rechten Laser-Entfernungsmesser (33b);
- der linke Laser-Entfernungsmesser (33a) ist bestandet von der Kühlwalze (5) angeordnet und derart ausgerichtet, dass sein Laserstrahl (34) parallel zur Oberfläche (6a) der Kühlwalze (5) verläuft und auf den linken Castfilmrand (2a) trifft, wobei der linke Laser-Entfernungsmesser (33a) dazu ausgebildet ist, eine Entfernung zum linken Castfilmrand (2a) zu messen und wobei die Steuereinrichtung (25) dazu ausgebildet ist, anhand dieses Messergebnisses fortlaufend den linken Castfilmrand (2a) zu ermitteln;
- der rechte Laser-Entfernungsmesser (33b) ist bestandet von der Kühlwalze (5) angeordnet und derart ausgerichtet, dass sein Laserstrahl (34) parallel zur Oberfläche (6a) der Kühlwalze (5) verläuft und auf den rechten Castfilmrand (2b) trifft, wobei der rechte Laser-Entfernungsmesser (33b) dazu ausgebildet ist, eine Entfernung zum rechten Castfilmrand (2b) zu messen und wobei die Steuereinrichtung (25) dazu ausgebildet ist, anhand dieses Messergebnisses fortlaufend den rechten Castfilmrand (2b) zu ermitteln.

14. Folienreckanlage (3) mit einer Anlage (1) zu Herstellung eines Castfilms (2), die nach einem der vorherigen Ansprüche aufgebaut ist.

## Claims

1. Line (1) for producing a cast film (2) for a film stretching unit (3), comprising the following features:
- a slot die (4), a chill roll (5) with a chill roll shell (6) extending between two opposite end faces (5a, 5b) of the chill roll (5), an electrode assembly (15), a high-voltage generation device, an insulator assembly (20), a sensor device (30) and a control device (25) are provided;
- the slot die (4) is configured to output a plastic melt (7) onto an impingement area (9) of the surface (6a) of the rotating chill roll (5), thereby forming a cast film (2);
- at a removal area (10) of the chill roll (5), which is arranged offset from the impingement area (9) in the direction of rotation of the chill roll (5), the cast film (2) can be removed from the surface (6a) of the chill roll (5) and fed directly or indirectly to a film stretching unit (3);
- the electrode assembly (15) is arranged between the impingement area (9) and the removal area (10) of the chill roll (5);
- the electrode assembly (15) extends at a distance from the surface (6a) of the chill roll (5) at least in a partial length of the chill roll (5) between the two end faces (5a, 5b) of the chill roll (5);
- the high-voltage generation device is configured to generate and apply a high voltage to the electrode assembly (15);
- the insulator assembly (20) is arranged between the electrode assembly (15) and the chill roll shell (6) of the chill roll (5);
- the sensor device (30) is configured to continuously detect the left and right cast film edge (2a, 2b);
- the control device (25) is configured, in order to avoid voltage flashovers between the electrode assembly (15) and the chill roll (5), to move the insulator assembly (20) on the basis of the detected left cast film edge (2a) and the detected right cast film edge (2b) in such a way that the insulator assembly (20) is arranged:
a) between the left end face (5a) of the chill roll (5) and the left cast film edge (2a); and
b) between the right end face (5b) of the chill roll (5) and the right cast film edge (2b); and
- a sensor area (31) of the sensor device (30) is provided downstream of the slot die (4) and upstream of the electrode assembly (15) in the output direction of the cast film (2).
- the insulator assembly (20) comprises a left insulator element (20a) and a right insulator element (20b);
- the left insulator element (20a) is movable from the left end face (5a) of the chill roll (5) toward the center (5c) of the chill roll (5) and vice versa;
- the right insulator element (20b) is movable from the right end face (5b) of the chill roll (5) toward the center (5c) of the chill roll (5) and vice versa, wherein
- the left and right insulator element (20a, 20b) are movable independently of each other;
- the left insulator element (20a) is tubular, wherein the electrode assembly (15) in the form of a ribbon, a wire or a rod passes through the tubular left insulator element (20a); and wherein
- the right insulator element (20b) is tubular, wherein the electrode assembly (15) in the form of a ribbon, a wire or a rod passes through the tubular right insulator element (20b).

2. Line (1) according to claim 1, **characterized by** the following feature:
- the electrode assembly (15) is free of an electrically conductive brush that at least partially covers the cast film (2).

3. Line (1) according to claim 1, **characterized by** the following feature:
- the control device (25) is configured to move the left and right insulator element (20a, 20b) in the direction of the center (5c) of the chill roll (5) when the line (1) is started.

4. Line (1) according to any of the preceding claims, **characterized by** the following feature:
- the sensor device (30) comprises a left sensor arrangement (30a) for detecting the left cast film edge (2a) and a right sensor arrangement (30b) for detecting the right cast film edge (2b).

5. Line (1) according to claim 4, **characterized by** the following features:
- the left and right sensor arrangements (30a, 30b) each comprise a first IR sensor (30a₁, 30b₁) and a second IR sensor (30a₂, 30b₂);
- the sensor areas (31) of the first and second IR sensors (30a₁, 30a₂) of the left sensor arrangement (30a) are arranged offset from one another in the longitudinal direction of the chill roll (5), the sensor area (31) of the second IR sensor (30a₂) of the left sensor arrangement (30a) being arranged closer to the left end face (5a) of the chill roll (5) than the sensor area (31) of the first IR sensor (30a₁) of the left sensor arrangement (30a);
- the sensor areas (31) of the first and second IR sensors (30b₁, 30b₂) of the right sensor arrangement (30b) are arranged offset from one another in the longitudinal direction of the chill roll (5), the sensor area (31) of the second IR sensor (30b₂) of the right sensor arrangement (30b) being arranged closer to the right end face (5b) of the chill roll (5) than the sensor area (31) of the first IR sensor (30b₁) of the right sensor arrangement (30b).

6. Line (1) according to claim 5, **characterized by** the following features:
- the sensor area (31) of the first IR sensor (30a₁) of the left sensor arrangement (30a) is arranged without overlapping with the sensor area (31) of the second IR sensor (30a₂) of the left sensor arrangement (30a);
- the sensor area (31) of the first IR sensor (30b₁) of the right sensor arrangement (30b) is arranged without overlapping with the sensor area (31) of the second IR sensor (30b₂) of the right sensor arrangement (30b).

7. Line (1) according to any one of claims 5 or 6, **characterized by** the following feature:
- a sensor beam (32) of the respective IR sensor (30a₁, 30a₂, 30b₁, 30b₂) of the left and the right sensor arrangement (30a, 30b) impinges on the surface (6a) of the chill roll (5) at an angle, wherein the angle is larger than 75°, 80°, 85°, 90°, 95°, 100°, 105°, 110°, 115°, 120°, 125° or 130° and wherein the angle is smaller than 140°, 135°, 130°, 125°, 120°, 115°, 110°, 105°, 100°, 95°, 90°, 85°, 80° or 75°.

8. Line (1) according to any of claims 5 to 7 and according to claim 1, **characterized by** the following features:
- the left sensor arrangement (30a) is movable synchronously with the left insulator element (20a);
- the right sensor arrangement (30b) is movable synchronously with the right insulator element (20b).

9. Line (1) according to any of claims 5 to 8 and any of claims 1 to 3, **characterized by** the following features:
- the control device (25) is configured to detect the measurement values of the first and second IR sensor (30a₁, 30a₂) of the left sensor arrangement (30a) and the measurement values of the first and second IR sensor (30b₁, 30b₂) of the right sensor arrangement (30b);
- the control device (25) is configured to:
a) move the left insulator element (20a) toward the center (5c) of the chill roll (5) when the measurement values from the first and second IR sensor (30a₁, 30a₂) of the left sensor arrangement (30a) are below a first temperature threshold; and/or
move the right insulator element (20b) toward the center (5c) of the chill roll (5) when the measurement values from the first and second IR sensor (30b₁, 30b₂) of the right sensor arrangement (30b) are below the first temperature threshold;
and/or
b) move the left insulator element (20a) toward the left end face (5a) of the chill roll (5) when the measurement values from the first and second IR sensor (30a₁, 30a₂) of the left sensor arrangement (30a) are above a second temperature threshold; and/or
move the right insulator element (20b) toward the right end face (5b) of the chill roll (5) when the measurement values from the first and second IR sensor (30b₁, 30b₂) of the right sensor arrangement (30b) are above the second temperature threshold;
and/or
c) leave the left insulator element (20a) in position when a measurement value of the first IR sensor (30a₁) of the left sensor arrangement (30a) differs from a measurement value of the second IR sensor (30az) of the left sensor arrangement (30a) by a predetermined limit value; and/or leave the right insulator element (20b) in position when a measurement value of the first IR sensor (30b₁) of the right sensor arrangement (30b) differs from a measurement value of the second IR sensor (30b₂) of the right sensor arrangement (30b) by a predetermined limit value.

10. Line (1) according to any of claims 5 to 8 and any of claims 1 to 3, **characterized by** the following features:
- the control device (25) is configured to detect the measurement values of the first and second IR sensor (30a₁, 30a₂) of the left sensor arrangement (30a) and the measurement values of the first and second IR sensor (30b₁, 30b₂) of the right sensor arrangement (30b), wherein the respective IR sensors (30a₁, 30a₂, 30b₁, 30b₂) are configured to measure a temperature of a normal region (C) of the cast film (2), a temperature of an edge region (B) of the cast film (2), and a temperature of a chill roll region (A) of the chill roll (2);
- the control device (25) is configured to:
a) move the left insulator element (20a) toward the center (5c) of the chill roll (5) if the first and second IR sensor (30a₁, 30a₂) of the left sensor arrangement (30a) measure the temperature of the chill roll region (A); and/or
move the right insulator element (20b) toward the center (5c) of the chill roll (5) if the first and second IR sensor (30b₁, 30b₂) of the right sensor arrangement (30b) measure the temperature of the chill roll region (A);
and/or
b) move the left insulator element (20a) toward the left end face (5a) of the chill roll (5) if the first and second IR sensor (30a₁, 30a₂) of the left sensor arrangement (30a) measure the temperature of the normal region (C); and/or
move the right insulator element (20b) toward the right end face (5b) of the chill roll (5) if the first and second IR sensor (30b₁, 30b₂) of the right sensor arrangement (30b) measure the temperature of the normal region (C);
and/or
c) leave the left insulator element (20a) in position if the first and second IR sensor (30a₁, 30a₂) of the left sensor arrangement (30a) measure temperatures of different regions (A, B, C); and/or
leave the right insulator element (20b) in position if the first and second IR sensor (30b₁, 30b₂) of the right sensor arrangement (30b) measure temperatures of different regions (A, B, C).

11. Line (1) according to any of claims 1 to 3, **characterized by** the following features:
- the sensor device (30) comprises two cameras;
- the first camera is arranged and configured in such a way that it
a) is directed towards an area of the chill roll (5) which lies between the impingement area (9) of the plastic melt (7) and the electrode assembly (15) and records an area at the left cast film edge (2a), wherein the control device (25) is configured to continuously determine the left cast film edge (2a) on the basis of these recordings; or
b) is directed towards an area between the slot die (4) and the impingement area (9) of the plastic melt (7) on the chill roll (5) and records an area at the left cast film edge (2a), wherein the control device (25) is configured to continuously determine the left cast film edge (2a) on the basis of these recordings;
and
- the second camera is arranged and configured in such a way that it
a) is directed towards an area of the chill roll (5) which lies between the impingement area (9) of the plastic melt (7) and the electrode assembly (15) and records an area at the right cast film edge (2b), wherein the control device (25) is configured to continuously determine the right cast film edge (2b) on the basis of these recordings; or
b) is directed towards an area between the slot die (4) and the impingement area (9) of the plastic melt (7) on the chill roll (5) and records an area at the right cast film edge (2b), wherein the control device (25) is configured to continuously determine the right cast film edge (2b) on the basis of these recordings.

12. Line (1) according to any of claims 1 to 3, **characterized by** the following features:
- the sensor device (30) comprises a left laser scanner (36a) and a right laser scanner (36b);
- the left laser scanner (36a) is arranged in the region of the left cast film edge (2a) and is configured to measure the distance to the cast film (2) or a thickness of the cast film (2), wherein the control device (25) is configured to continuously determine the left cast film edge (2a) on the basis of this measurement result;
- the right laser scanner (36b) is arranged in the region of the right cast film edge (2b) and is configured to measure the distance to the cast film (2) or a thickness of the cast film (2), wherein the control device (25) is configured to continuously determine the right cast film edge (2b) on the basis of this measurement result.

13. Line (1) according to any of claims 1 to 3, **characterized by** the following features:
- the sensor device (30) comprises a left laser rangefinder (33a) and a right laser rangefinder (33b);
- the left laser rangefinder (33a) is arranged at a distance from the chill roll (5) and aligned in such a way that its laser beam (34) runs parallel to the surface (6a) of the chill roll (5) and impinges on the left cast film edge (2a), wherein the left laser rangefinder (33a) is configured to measure a distance to the left cast film edge (2a), and wherein the control device (25) is configured to continuously determine the left cast film edge (2a) on the basis of this measurement result;
- the right laser rangefinder (33b) is arranged at a distance from the chill roll (5) and aligned in such a way that its laser beam (34) runs parallel to the surface (6a) of the chill roll (5) and impinges on the right cast film edge (2b), wherein the right laser rangefinder (33b) is configured to measure a distance to the right cast film edge (2b), and wherein the control device (25) is configured to continuously determine the right cast film edge (2b) on the basis of this measurement result.

14. Film stretching unit (3) comprising a line (1) for producing a cast film (2), which is constructed according to one of the preceding claims.

## Revendications

1. Installation (1) de fabrication d'un film coulé (2) destinée à une installation d'étirage de feuilles (3), comprenant les particularités suivantes :
- sont prévus : une buse à fente large (4), un rouleau refroidisseur (5) doté d'un bandage (6) s'étendant entre deux faces terminales (5a, 5b) opposées du rouleau refroidisseur (5), un système d'électrodes (15), un dispositif générateur de haute tension, un système isolant (20), un dispositif capteur (30) et un dispositif de commande (25) ;
- la buse à fente large (4) est conçue pour distribuer de la matière plastique en fusion (7) sur une zone d'incidence (9) de la surface (6a) du rouleau refroidisseur (5) en rotation, formant ainsi un film coulé (2) ;
- au niveau d'une zone de prélèvement (10) du rouleau refroidisseur (5), située en décalage de la zone d'incidence (9) dans le sens de rotation du rouleau refroidisseur (5), le film coulé (2) peut être prélevé de la surface (6a) du rouleau refroidisseur (5) et peut être introduit directement ou indirectement dans une installation d'étirage de feuilles (3) ;
- le système d'électrodes (15) est agencé entre la zone d'incidence (9) et la zone de prélèvement (10) du rouleau refroidisseur (5) ;
- le système d'électrodes (15) s'étend à distance de la surface (6a) du rouleau refroidisseur (5) au moins sur une longueur partielle du rouleau refroidisseur (5) entre les deux faces terminales (5a, 5b) du rouleau refroidisseur (5) ;
- le dispositif générateur de haute tension est conçu pour générer une haute tension et pour l'appliquer au système d'électrodes (15) ;
- le système isolant (20) est agencé entre le système d'électrodes (15) et le bandage (6) du rouleau refroidisseur (5) ;
- le dispositif capteur (30) est conçu pour détecter en continu les bords gauche et droit (2a, 2b) du film coulé ;
- pour empêcher les claquages de tension entre le système d'électrodes (15) et le rouleau refroidisseur (5), le dispositif de commande (25) est conçu pour déplacer le système isolant (20) à l'aide du bord gauche (2a) du film coulé à détecter et du bord droit (2b) du film coulé à détecter de telle façon que le système isolant (20) se trouve :
a) entre la face terminale gauche (5a) du rouleau refroidisseur (5) et le bord gauche (2a) du film coulé, et
b) entre la face terminale droite (5b) du rouleau refroidisseur (5) et le bord droit (2b) du film coulé ;
- une plage de détection (31) du dispositif capteur (30) est prévue, vue dans la direction de décharge du film coulé (2), en aval de la buse à fente large (4) et en amont du système d'électrodes (15) ;
- le système isolant (20) comprend un élément isolant gauche (20a) et un élément isolant droit (20b) ;
- l'élément isolant gauche (20a) est déplaçable depuis la face terminale gauche (5a) du rouleau refroidisseur (5) vers le centre (5c) du rouleau refroidisseur (5), et inversement ;
- l'élément isolant droit (20b) est déplaçable depuis la face terminale droite (5b) du rouleau refroidisseur (5) vers le centre (5c) du rouleau refroidisseur (5), et inversement, étant entendu que
- les éléments isolants gauche et droit (20a, 20b) sont déplaçables indépendamment l'un de l'autre ;
a) l'élément isolant gauche (20a) est tubulaire, ledit système d'électrodes (15) étant introduit dans l'élément isolant gauche (20a) tubulaire sous la forme d'un ruban, d'un fil ou d'une barre, et
b) l'élément isolant droit (20b) est tubulaire, ledit système d'électrodes (15) étant introduit dans l'élément isolant droit (20b) tubulaire sous la forme d'un ruban, d'un fil ou d'une barre.

2. Installation (1) selon la revendication 1, **caractérisée par** la particularité suivante :
- le système d'électrodes (15) est exempt de brosse électriquement conductrice recouvrant au moins partiellement le film coulé (2).

3. Installation (1) selon la revendication 1, **caractérisée par** la particularité suivante :
- le dispositif de commande (25) est conçu pour déplacer les éléments isolants gauche et droit (20a, 20b) vers le centre (5c) du rouleau refroidisseur (5) au démarrage de l'installation (1).

4. Installation (1) selon l'une des revendications précédentes, **caractérisée par** la particularité suivante :
- le dispositif capteur (30) comprend un organe capteur gauche (30a) pour détecter le bord gauche (2a) du film coulé et un organe capteur droit (30b) pour détecter le bord droit (2b) du film coulé.

5. Installation (1) selon la revendication 4, **caractérisée par** les particularités suivantes :
- les organes capteurs gauche et droit (30a, 30b) comprennent respectivement un premier capteur IR (30a₁, 30b₁) et un deuxième capteur IR (30a₂, 30b₂) ;
- les plages de détection (31) du premier et du deuxième capteur IR (30a₁, 30a₂) de l'organe capteur gauche (30a) sont décalées l'une de l'autre dans le sens longitudinal du rouleau refroidisseur (5), la plage de détection (31) du deuxième capteur IR (30a₂) de l'organe capteur gauche (30a) étant plus proche de la face terminale gauche (5a) du rouleau refroidisseur (5) que ne l'est la plage de détection (31) du premier capteur IR (30a₁) de l'organe capteur gauche (30a) ;
- les plages de détection (31) du premier et du deuxième capteur IR (30b₁, 30b₂) de l'organe capteur droit (30b) sont décalées l'une de l'autre dans le sens longitudinal du rouleau refroidisseur (5), la plage de détection (31) du deuxième capteur IR (30b₂) de l'organe capteur droit (30b) étant plus proche de la face terminale droite (5b) du rouleau refroidisseur (5) que ne l'est la plage de détection (31) du premier capteur IR (30b₁) de l'organe capteur droit (30b).

6. Installation (1) selon la revendication 5, **caractérisée par** les particularités suivantes :
- la plage de détection (31) du premier capteur IR (30a₁) de l'organe capteur gauche (30a) est agencée sans chevaucher la plage de détection (31) du deuxième capteur IR (30a₂) de l'organe capteur gauche (30a) ;
- la plage de détection (31) du premier capteur IR (30b₁) de l'organe capteur droit (30b) est orientée sans chevaucher la plage de détection (31) du deuxième capteur IR (30b₂) de l'organe capteur droit (30b).

7. Installation (1) selon l'une des revendications 5 et 6, **caractérisée par** la particularité suivante :
- un rayonnement de détection (32) du capteur IR respectif (30a₁, 30a₂, 30b₁, 30b₂) des organes capteurs gauche et droit (30a, 30b) vient frapper la surface (6a) du rouleau refroidisseur (5) en formant un angle, lequel est supérieur à 75°, 80°, 85°, 90°, 95°, 100°, 105°, 110°, 115°, 120°, 125° ou 130° et inférieur à 140°, 135°, 130°, 125°, 120°, 115°, 110°, 105°, 100°, 95°, 90°, 85°, 80° ou 75°.

8. Installation (1) selon l'une des revendications 5 à 7 et selon la revendication 1, **caractérisée par** les particularités suivantes :
- l'organe capteur gauche (30a) est déplaçable en synchronisation avec l'élément isolant gauche (20a) ;
- l'organe capteur droit (30b) est déplaçable en synchronisation avec l'élément isolant droit (20b).

9. Installation (1) selon l'une des revendications 5 à 8 et l'une des revendications 1 à 3, **caractérisée par** les particularités suivantes :
- le dispositif de commande (25) est conçu pour relever les valeurs de mesure du premier et du deuxième capteur IR (30a₁, 30a₂) de l'organe capteur gauche (30a) et les valeurs de mesure du premier et du deuxième capteur IR (30b₁, 30b₂) de l'organe capteur droit (30b) ;
- le dispositif de commande (25) est conçu pour :
a) déplacer l'élément isolant gauche (20a) vers le centre (5c) du rouleau refroidisseur (5) lorsque les valeurs de mesure du premier et du deuxième capteur IR (30a₁, 30a₂) de l'organe capteur gauche (30a) sont inférieures à une première valeur seuil de température ; et/ou
déplacer l'élément isolant droit (20b) vers le centre (5c) du rouleau refroidisseur (5) lorsque les valeurs de mesure du premier et du deuxième capteur IR (30b₁, 30b₂) de l'organe capteur droit (30b) sont inférieures à la première valeur seuil de température ;
et/ou
b) déplacer l'élément isolant gauche (20a) vers la face terminale gauche (5a) du rouleau refroidisseur (5) lorsque les valeurs de mesure du premier et du deuxième capteur IR (30a₁, 30a₂) de l'organe capteur gauche (30a) sont supérieures à une deuxième valeur seuil de température ; et/ou
déplacer l'élément isolant droit (20b) vers la face terminale droite (5b) du rouleau refroidisseur (5) lorsque les valeurs de mesure du premier et du deuxième capteur IR (30b₁, 30b₂) de l'organe capteur droit (30b) sont supérieures à une deuxième valeur seuil de température ;
et/ou
c) laisser l'élément isolant gauche (20a) en place lorsqu'une valeur de mesure du premier capteur IR (30a₁) de l'organe capteur gauche (30a) s'écarte d'une valeur de mesure du deuxième capteur IR (30a₂) de l'organe capteur gauche (30a) selon une certaine valeur limite ; et/ou
laisser l'élément isolant droit (20b) en place lorsqu'une valeur de mesure du premier capteur IR (30b₁) de l'organe capteur droit (30b) s'écarte d'une valeur de mesure du deuxième capteur IR (30b₂) de l'organe capteur droit (30b) selon une certaine valeur limite.

10. Installation (1) selon l'une des revendications 5 à 8 et l'une des revendications 1 à 3, **caractérisée par** les particularités suivantes :
- le dispositif de commande (25) est conçu pour relever les valeurs de mesure du premier et du deuxième capteur IR (30a₁, 30a₂) de l'organe capteur gauche (30a) et les valeurs de mesure du premier et du deuxième capteur IR (30b₁, 30b₂) de l'organe capteur droit (30b), lesdits capteurs IR respectifs (30a₁, 30a₂, 30b₁, 30b₂) étant conçus pour mesurer une température d'une zone normale (C) du film coulé (2), une température d'une zone de bord (B) du film coulé (2) et une température d'une zone (A) du rouleau refroidisseur (2) ;
- le dispositif de commande (25) est conçu pour :
a) déplacer l'élément isolant gauche (20a) vers le centre (5c) du rouleau refroidisseur (5) lorsque les premier et deuxième capteurs IR (30a₁, 30a₂) de l'organe capteur gauche (30a) mesurent la température de la zone (A) du rouleau refroidisseur ; et/ou déplacer l'élément isolant droit (20b) vers le centre (5c) du rouleau refroidisseur (5) lorsque les premier et deuxième capteurs IR (30b₁, 30b₂) de l'organe capteur droit (30b) mesurent la température de la zone (A) du rouleau refroidisseur ;
et/ou
b) déplacer l'élément isolant gauche (20a) vers la face terminale gauche (5a) du rouleau refroidisseur (5) lorsque les premier et deuxième capteurs IR (30a₁, 30a₂) de l'organe capteur gauche (30a) mesurent la température de la zone normale (C) ; et/ou déplacer l'élément isolant droit (20b) vers la face terminale droite (5b) du rouleau refroidisseur (5) lorsque les premier et deuxième capteurs IR (30b₁, 30b₂) de l'organe capteur droit (30b) mesurent la température de la zone normale (C) ;
et/ou
c) laisser l'élément isolant gauche (20a) en place lorsque les premier et deuxième capteurs IR (30a₁, 30a₂) de l'organe capteur gauche (30a) mesurent la température de zones différentes (A, B, C) ; et/ou
laisser l'élément isolant droit (20b) en place lorsque les premier et deuxième capteurs IR (30b₁, 30b₂) de l'organe capteur droit (30b) mesurent la température de zones différentes (A, B, C).

11. Installation (1) selon l'une des revendications 1 à 3, **caractérisée par** les particularités suivantes :
- le dispositif capteur (30) comprend deux caméras ;
- la première caméra est agencée et conçue de façon à :
a) être dirigée vers une zone du rouleau refroidisseur (5) située entre la zone d'incidence (9) de la matière plastique en fusion (7) et le système d'électrodes (15) et à prendre des vues d'une zone située sur le bord gauche (2a) du film coulé, ledit dispositif de commande (25) étant conçu pour détecter en continu le bord gauche (2a) du film coulé à l'aide de ces prises de vues ; ou
b) être dirigée vers une zone située entre la buse à fente large (4) et la zone d'incidence (9) de la matière plastique en fusion (7) sur le rouleau refroidisseur (5) et à prendre des vues d'une zone située sur le bord gauche (2a) du film coulé, ledit dispositif de commande (25) étant conçu pour détecter en continu le bord gauche (2a) du film coulé à l'aide de ces prises de vues ;
et
- la deuxième caméra est agencée et conçue de façon à :
a) être dirigée vers une zone du rouleau refroidisseur (5) située entre la zone d'incidence (9) de la matière plastique en fusion (7) et le système d'électrodes (15) et à prendre des vues d'une zone située sur le bord droit (2b) du film coulé, ledit dispositif de commande (25) étant conçu pour détecter en continu le bord droit (2b) du film coulé à l'aide de ces prises de vues ; ou
b) être dirigée vers une zone située entre la buse à fente large (4) et la zone d'incidence (9) de la matière plastique en fusion (7) sur le rouleau refroidisseur (5) et à prendre des vues d'une zone située sur le bord droit (2b) du film coulé, ledit dispositif de commande (25) étant conçu pour détecter en continu le bord droit (2b) du film coulé à l'aide de ces prises de vues.

12. Installation (1) selon la revendication 1 à 3, **caractérisée par** les particularités suivantes :
- le dispositif capteur (30) comprend un scanner laser gauche (36a) et un scanner laser droit (36b) ;
- le scanner laser gauche (36a) est agencé à proximité du bord gauche (2a) du film coulé et est conçu pour mesurer la distance au film coulé (2) ou l'épaisseur du film coulé (2), ledit dispositif de commande (25) étant conçu pour détecter en continu le bord gauche (2a) du film coulé à l'aide du résultat de cette mesure ;
- le scanner laser droit (36b) est agencé à proximité du bord droit (2b) du film coulé et est conçu pour mesurer la distance au film coulé (2) ou l'épaisseur du film coulé (2), ledit dispositif de commande (25) étant conçu pour détecter en continu le bord droit (2b) du film coulé.

13. Installation (1) selon l'une des revendications 1 à 3, **caractérisée par** les particularités suivantes :
- le dispositif capteur (30) comprend un capteur de distance laser gauche (33a) et un capteur de distance laser droit (33b) ;
- le capteur de distance laser gauche (33a) est écarté du rouleau refroidisseur (5) et est conçu pour que son rayonnement laser (34) soit parallèle à la surface (6a) du rouleau refroidisseur (5) et vienne frapper le bord gauche (2a) du film coulé, ledit capteur de distance laser gauche (33a) étant conçu pour mesurer la distance au bord gauche (2a) du film coulé et ledit dispositif de commande (25) étant conçu pour détecter en continu le bord gauche (2a) du film coulé à l'aide du résultat de cette mesure ;
- le capteur de distance laser droit (33b) est écarté du rouleau refroidisseur (5) et conçu pour que son rayonnement laser (34) soit parallèle à la surface (6a) du rouleau refroidisseur (5) et vienne frapper le bord droit (2b) du film coulé, ledit capteur de distance laser droit (33b) étant conçu pour mesurer la distance au bord droit (2b) du film coulé et ledit dispositif de commande (25) étant conçu pour détecter en continu le bord droit (2b) du film coulé à l'aide du résultat de cette mesure.

14. Installation d'étirage de feuilles (3) dotée d'une installation (1) de fabrication d'un film coulé (2) constituée selon l'une des revendications précédentes.
